(19) Europäisches Patentamt
European Patent Office
Office européen des brevets

(11) **EP 4 187 229 A1**

(12) **EUROPEAN PATENT APPLICATION**
published in accordance with Art. 153(4) EPC

(43) Date of publication:
**31.05.2023 Bulletin 2023/22**

(21) Application number: **21846905.4**

(22) Date of filing: **15.06.2021**

(51) International Patent Classification (IPC):
**G01N 15/14** (2006.01)        **G01N 21/64** (2006.01)

(52) Cooperative Patent Classification (CPC):
**G01N 15/14; G01N 21/64**

(86) International application number:
**PCT/JP2021/022635**

(87) International publication number:
**WO 2022/019006 (27.01.2022 Gazette 2022/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.07.2020   JP 2020124477**

(71) Applicant: **Sony Group Corporation**
**Minato-Ku, Tokyo, 108-0075 (JP)**

(72) Inventors:
• **YAMANE Kenji**
**Tokyo 108-0075 (JP)**
• **UMETSU Tomoyuki**
**Tokyo 108-0075 (JP)**

(74) Representative: **D Young & Co LLP**
**120 Holborn**
**London EC1N 2DY (GB)**

(54) **INFORMATION PROCESSING SYSTEM AND INFORMATION PROCESSING METHOD**

(57)     An object of the present technology is to provide an information processing system that automatically executes panel design.

The present technology provides an information processing system including: a fluorochrome database that holds fluorescence signal data of a fluorochrome associated with measuring instrument information; a reagent database that holds correspondence information regarding a correspondence between a reagent and the fluorochrome; and an information processing device that acquires the fluorescence signal data of the fluorochrome corresponding to the reagent from the fluorochrome database using the correspondence information regarding the reagent in the reagent database identified on the basis of input measurement target information and performs information processing using the fluorescence signal data of the fluorochrome.

*FIG. 3*

**Description**

TECHNICAL FIELD

The present technology relates to an information processing system and an information processing method. More specifically, the present technology relates to an information processing system and an information processing method of executing various types of information processing related to a fluorochrome used in analysis of, for example, a biomolecule.

BACKGROUND ART

For example, characteristics of particles are measured by labeling a particle population, such as cells, microorganisms, and liposomes, with a fluorochrome and measuring the intensity and/or pattern of fluorescence generated from the fluorochrome excited by irradiating each of the particles of the particle population with laser light. As a representative example of particle analyzers performing the above measurement, a flow cytometer can be mentioned.

The flow cytometer is a device that analyzes a plurality of particles one by one by irradiating the particles flowing in a line inside a channel with laser light (excitation light) having a specific wavelength and detecting fluorescence and/or scattered light emitted from each of the particles. The flow cytometer can convert light detected by a photodetector into an electrical signal for digitization, and perform statistical analysis to determine characteristics, for example, types, sizes, structures, and the like of individual particles.

Several technologies have been proposed so far in relation to a method of selecting a fluorochrome used for labeling a particle population to be analyzed by a flow cytometer. For example, Patent Document 1 below describes a method of designing a probe panel of a flow cytometer, the method including: determining a distortion factor that quantifies a spillover effect caused by emission of a first label, intended to be measured in a first channel, into a second channel; inputting a maximum expected signal of a first probe-label combination including the first label and a first probe; calculating an increase in detection limit in the second channel on the basis of the distortion factor and the maximum expected signal of the first probe-label combination; and selecting a probe-label combination to be included in the probe panel on the basis of the calculated increase in detection limit.

CITATION LIST

PATENT DOCUMENT

Patent Document 1: Japanese Patent Application National Publication (Laid-Open) No. 2016-517000

SUMMARY OF THE INVENTION

PROBLEMS TO BE SOLVED BY THE INVENTION

In order to label the particle population to be analyzed by the flow cytometer, a plurality of fluorochrome-labeled antibodies is often used. A combination of the fluorochrome-labeled antibodies used in the analysis is also referred to as a panel, and a process for determining the panel is also referred to as panel design. The number of fluorochrome-labeled antibodies used in the analysis tends to increase, and accordingly, it has become more difficult to manually design a panel. Therefore, if there is an information processing system that automatically executes the panel design, it is considered to contribute to improvement of convenience for a user who performs the analysis.

Furthermore, it is considered that efficient acquisition of necessary information regarding a fluorochrome and construction of a database regarding the fluorochrome-labeled antibodies are also important for an information processing system that automatically executes the panel design.

Furthermore, names of the fluorochrome-labeled antibodies constituting the panel and names of fluorochromes and antibodies constituting the fluorochrome-labeled antibodies have notational variations. It is considered that convenience for a user is further improved if information processing such as the panel design or the database construction can be appropriately executed even though there are notational variations.

Therefore, an object of the present technology is to provide a technique for coping with at least one of the above problems.

SOLUTIONS TO PROBLEMS

The present technology provides

an information processing system including:

a fluorochrome database that holds fluorescence signal data of a fluorochrome associated with measuring instrument information;

a reagent database that holds correspondence information regarding a correspondence between a reagent and the fluorochrome; and

an information processing device that acquires the fluorescence signal data of the fluorochrome corresponding to the reagent from the fluorochrome database using the correspondence information regarding the reagent in the reagent database identified on the basis of input measurement target information and performs information processing using the fluorescence signal data of the fluorochrome.

The fluorescence signal data can include fluorescence spectrum data.

The measuring instrument information can include at least one of a model name of a measuring instrument, a laser light wavelength, or a detection wavelength range of a detector.

The information processing device can

receive the correspondence information from the reagent database, and then,

acquire the fluorescence signal data of the fluorochrome corresponding to the reagent from the fluorochrome database using the received correspondence information.

The information processing device can

acquire the fluorescence signal data of the fluorochrome corresponding to the reagent from the fluorochrome database without receiving the correspondence information from the reagent database.

The measurement target information can include a name, an abbreviation, or a number of at least one biomolecule,

the correspondence information can include information indicating a correspondence between the biomolecule and the reagent, and

the information processing device can output recommendation information of the reagent corresponding to the biomolecule by the information processing.

The information processing device can

search the reagent database on the basis of the biomolecule to identify the reagent corresponding to the biomolecule; and then,

acquire, from the fluorochrome database, the fluorescence signal data of the fluorochrome associated with the measuring instrument information among a plurality of the fluorochromes associated with the reagent.

The recommendation information of the reagent can include information regarding the reagent associated with a combination of the biomolecule and a fluorochrome corresponding to the biomolecule acquired by the information processing.

The information processing system can further include an output unit that displays a screen prompting an input of the measurement target information, and the output unit can also display the recommendation information of the reagent.

The measurement target information can include a name, an abbreviation, or a number of at least one reagent, the fluorescence signal data can include fluorescence spectrum data, the information processing device can acquire measurement spectrum data acquired by irradiating a particle, labeled with the reagent, with excitation light, and then, the information processing device can perform fluorescence separation processing on the measurement spectrum data using the fluorescence spectrum data of the fluorochrome as the information processing.

The information processing system may further include a registration processing unit that executes reagent registration processing, and the registration processing unit may be configured to execute integration processing of notational variations of the measurement target information, the reagent, or the fluorochrome.

The reagent database or the fluorochrome database can include an integration processing data table that is referred to for executing the integration processing, and the registration processing unit can register measurement target information, a reagent, or a fluorochrome determined to be equivalent although having notational variations, in an existing record in the reagent database or the fluorochrome database.

The registration processing unit can create a new record for measurement target information, a reagent, or a fluorochrome that is not determined to be equivalent and register the new record in the reagent database or the fluorochrome database.

In the reagent database, a name of at least one of a reagent, a biomolecule, or a fluorochrome and/or at least one of a reactive organism, a host organism, an isotype of an antibody, a size, a price, or a sales company may be registered.

The information processing device can output the recommendation information on the basis of the price and/or the information regarding the sales company in the reagent database.

The fluorochrome database can include at least one of information regarding a measurement target or the measuring instrument information.

The information regarding a measurement target can include at least one of a target organism or the degree of expression of a biomolecule.

Furthermore, the measuring instrument information can include at least one of the number or wavelengths of excitation light sources of a measuring instrument, the number, types, or exposure gains of detectors included in the measuring instrument, and a flow rate in a sample flow channel included in the measuring instrument.

The fluorochrome database may be configured such that information regarding a fluorochrome acquired through a network is addable.

Furthermore, the present technology provides an information processing method executed by using a fluorochrome database that holds fluorescence signal data of a fluorochrome associated with measuring instrument information and a reagent database that holds correspondence information regarding a correspondence between a reagent and the fluorochrome, the information processing method including:

a fluorescence signal data acquisition step of acquiring the fluorescence signal data of the fluorochrome corresponding to the reagent from the fluorochrome database using the correspondence information regarding the reagent in the reagent database identified on the basis of input measurement target information; and

an information processing step of performing information processing using the fluorescence signal data of the fluorochrome.

BRIEF DESCRIPTION OF DRAWINGS

Fig. 1 is a schematic diagram of a configuration of a flow cytometer.

Fig. 2 is a diagram illustrating an example of a flow of an experiment in a case where the present technology is applied in flow cytometry.

Fig. 3 is a diagram illustrating a configuration example of an information processing system of the present technology.

Fig. 4 is a diagram illustrating a configuration example of an information processing device included in the information processing system of the present technology.

Fig. 5 is a diagram illustrating a configuration example of a server included in the information processing system of the present technology.

Fig. 6 is a flowchart illustrating an example of fluorescence signal data acquisition processing performed by the information processing system of the present technology.

Fig. 7 is a diagram illustrating an example of a correspondence information data table included in a reagent database.

Fig. 8 is a diagram illustrating an example of a biomolecule name integration processing table.

Fig. 9 is a diagram illustrating an example of a fluorochrome data table included in a fluorochrome database.

Fig. 10 is a diagram illustrating an example of the fluorochrome data table prepared for every measuring instrument.

Fig. 11 is a diagram illustrating an example of a fluorochrome name integration processing table.

Fig. 12 is a flowchart illustrating an example of the fluorescence signal data acquisition processing performed by the information processing system of the present technology.

Fig. 13 is a diagram illustrating a configuration example of the server included in the information processing system of the present technology.

Fig. 14 is a flowchart illustrating an example of panel design processing performed by the information processing system of the present technology.

Fig. 15A is a diagram for describing information processing according to the present technology.

Fig. 15B is a diagram for describing the information processing according to the present technology.

Fig. 16 is a diagram illustrating a matrix of square values of correlation coefficients.

Fig. 17 is a conceptual diagram for describing how to assign phosphors to biomolecules.

Fig. 18 is a flowchart illustrating an example of separability evaluation processing.

Fig. 19 is a diagram illustrating examples of data of an inter-phosphor SI.

Fig. 20 is a diagram illustrating an example of a window in which a candidate phosphor that substitutes for a phosphor having poor separation performance is displayed.

Fig. 21A is a diagram illustrating calculation results of the inter-phosphor SI.

Fig. 21B is a diagram illustrating calculation results of the inter-phosphor SI.

Fig. 22 is a diagram for describing a stain index.

Fig. 23 is a diagram illustrating examples of a calculation result of a stain index between phosphors.

Fig. 24 is a diagram illustrating examples of brightness data.

Fig. 25 is a diagram illustrating examples of fluorescence spectrum data.

Fig. 26 is a flowchart illustrating an example of reagent registration processing.

Fig. 27 is a diagram illustrating examples of reagent information to be registered.

Fig. 28 is a diagram illustrating that fluorochrome names in the reagent information are registered as unified names.

Fig. 29 is a diagram illustrating that biomolecule names in the reagent information are registered as unified names.

Fig. 30 is a diagram illustrating an example in which a new biomolecule name has been registered in the biomolecule name integration processing table.

Fig. 31 is a diagram illustrating an example of a result of the reagent registration processing.

Fig. 32 is a diagram illustrating another example of the result of the reagent registration processing.

Fig. 33 is a flowchart illustrating an example of the fluorescence signal data acquisition processing performed by the information processing system of the present technology.

Fig. 34 is a flowchart illustrating an example of fluorescence signal data acquisition processing performed by the information processing system of the present technology.

MODE FOR CARRYING OUT THE INVENTION

Hereinafter, preferred modes for carrying out the present technology will be described. Note that the embodiments to described hereinafter illustrate representative embodiments of the present technology, and the scope of the present technology is not limited only to these embodiments. Note that the present technology will be described in the following order.

1. First Embodiment (Information Processing System)

(1) Details of Problems of Invention
(2) Example of Flow of Experiment Performed using Present Technology
(3) Description of First Embodiment

(3-1) Configuration Example of Information Processing System
(3-2) Example of Processing Performed by Information Processing System (Panel Design)
(3-2-1) Example of Information Processing For Acquisition of Fluorescence Signal Data
(3-2-2) Another Example of Information Processing For Acquisition of Fluorescence Signal Data
(3-2-3) Example of Panel Design Information Processing Including Fluorescence Signal Data Acquisition Processing
(3-2-4) Example of Separability Evaluation Processing
(3-2-5) Generation of Database
(3-2-5-1) Generation of Fluorochrome Database
(3-2-5-2) Generation of Reagent Database
(3-2-5-3) Reagent Registration Processing Using Integration Processing Table
(3-3) Example of Processing Performed by Information Processing System (Unmixing Processing)
(3-3-1) Example of Information Processing For Acquisition of Fluorescence Signal Data
(3-3-2) Another Example of Information Processing For Acquisition of Fluorescence Signal Data

2. Second Embodiment (Information Processing Method)
3. Other Embodiments

1. First Embodiment (Information Processing System)

(1) Details of Problems of Invention

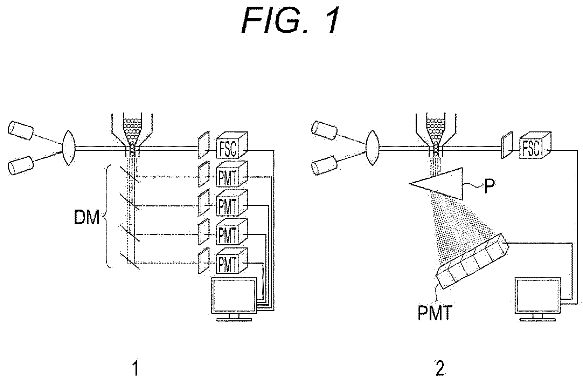

Flow cytometers can be roughly classified into a filter type and a spectral type, for example, from a viewpoint of an optical system for fluorescence measurement. The filter-type flow cytometer can adopt a configuration as illustrated in 1 of Fig. 1 to extract only target light information from a target fluorochrome. Specifically, light generated by irradiating particles with light is branched into a plurality of beams by a wavelength separation unit DM, for example, a dichroic mirror or the like, to pass through different filters, and then, each of the beams of branched light is measured by a plurality of detectors, for example, a photomultiplier tube PMT and the like. That is, in the filter-type flow cytometer, multi-color fluorescence detection is performed by performing fluorescence detection for each wavelength band corresponding to each fluorochrome using a detector corresponding to each fluorochrome. At that time, in a case where a plurality of fluorochromes having close fluorescence wavelengths is used, fluorescence correction processing can be performed in order to calculate a more accurate amount of fluorescence. However, in a case where the plurality of fluorochromes whose fluorescence spectra are extremely close to each other is used, leakage of fluorescence to a detector other than a detector in which a fluorochrome needs to be detected increases, and thus, there may also occur an event in which it is difficult to perform the fluorescence correction.

The spectral-type flow cytometer analyzes the amount of fluorescence of each of particles by performing deconvolution (unmixing) on fluorescence data obtained by detecting light generated by irradiating the particles with light using spectrum information of fluorochromes used for staining. As illustrated in 2 of Fig. 1, the spectral-type flow cytometer disperses fluorescence using a prism spectroscopic optical element P. Furthermore, the spectral-type flow cytometer includes an array-type detector, for example, an array-type photomultiplier tube PMT or the like instead of a large number of photodetectors included in the filter-type flow cytometer in order to detect the dispersed fluorescence. The spectral-type flow cytometer is more likely to avoid an influence of leakage of fluorescence than the filter-type flow cytometer, and is more appropriate for analysis using a plurality of fluorochromes.

In order to advance comprehensive interpretation in the basic medical and clinical field, multi-color analysis using a plurality of fluorochromes has become widespread in flow cytometry as well. However, if a large number of fluorochromes are used in one-time measurement as in the multi-color analysis, fluorescence from a fluorochrome other than a target fluorochrome leaks into each detector in the filter-type flow cytometer as described above so that analysis accuracy decreases. In a case where the number of colors is large, the problem of the leakage of fluorescence can be solved to some extent by using the spectral-type flow cytometer, but it is necessary to perform appropriate panel design (to design combinations of fluorochromes and antibodies) in which a fluorescence spectrum shape, an antibody expression amount, and brightness of a fluorochrome are taken into consideration in order to perform more appropriate multi-color analysis.

Conventionally, panel design greatly depends on user's experience and adjustment by trial and error. However, the number of combinations of fluorochromes that need to be considered rapidly increases as the number of colors increases, particularly when the number of colors is about 20 or more, and thus, it is extremely difficult to find an optimal dye combination having sufficient decomposition performance.

Device manufacturers that sell flow cytometers, reagent manufacturers that sell antibodies with fluorochromes, and the like disclose web tools for panel design configured to promote sales of their own products. However, it is difficult for these web tools to exhibit sufficient practicality in some cases as the number of colors increases.

When the number of colors is, for example, 10 or more, it is difficult to avoid occurrence of a significant overlap between fluorescence spectra, and it is difficult for a person to expect fluorescence leakage that actually occurs from an appearance of the overlap between the spectra. If there is one parameter, adjustment can be manually performed by a person to some extent, but a plurality of parameters that needs to be adjusted independently exists in the panel design of the multi-color analysis. As major examples of parameters that need to be considered, for example, the fluorescence spectrum shape, an expression amount of an antigen, and brightness of a fluorochrome described above can be mentioned. Moreover, it is also desirable to consider excitation characteristics, availability, and cost of fluorochromes. Therefore, it is extremely difficult to determine which fluorochrome needs to be preferentially adopted and to expect an influence on the whole due to changes in combinations of some fluorochromes on the whole. It is difficult to say that the basic principle regarding the fluorescence correction and independent information regarding each fluorochrome and each antigen are not sufficient for appropriate panel design, and it is extremely complicated to manually find an optimal combination. Therefore, if there is an information processing system that automatically executes the panel design, it is considered to contribute to improvement of convenience for a user who performs the analysis.

Furthermore, it is desirable to consider characteristics of the respective fluorochromes for the appropriate panel design. Therefore, it is considered that it is important for the information processing system that automatically executes the panel design to efficiently acquire necessary information regarding the fluorochromes.

Furthermore, various reagent manufacturers provide various fluorochrome-labeled antibodies that can be adopted in the panel design. For example, if a database of the fluorochrome-labeled antibodies can be constructed in order to efficiently examine the various fluorochrome-labeled antibodies, it is considered to be useful not only for the user who performs the analysis but also for the information processing system that automatically executes the panel design.

Furthermore, the number of fluorochrome-labeled antibodies constituting a panel is often large, and moreover, a plurality of reagent manufacturers may give mutually different names to an identical fluorochrome-labeled antibody. There are many kinds of fluorochromes and antibodies, and these may also be given a plurality of different names. In this manner, names of the fluorochrome-labeled antibodies and names of the fluorochromes and antibodies (or antigens) constituting the fluorochrome-labeled antibodies have notational variations. Such notational variations may further complicate the panel design. It is considered that convenience for the user is further improved if information processing such as the panel design or the database construction can be appropriately executed even though there are notational variations.

An object of the present technology is to solve at least one of the above problems.

(2) Example of Flow of Experiment Performed using Present Technology

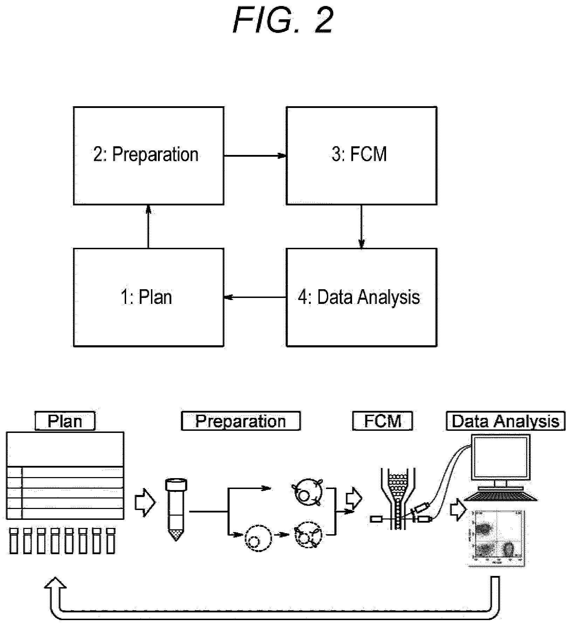

The present technology may be used to generate a list of combinations of antibodies and phosphors used in particle analysis, for example, flow cytometry or the like. In particular, the present technology may be used to generate recommendation information of a reagent (particularly, a fluorochrome-labeled antibody) used in the flow cytometry. An example of a flow of an experiment in a case where the present technology is applied in the flow cytometry will be described with reference to Fig. 2.

The flow of the experiment using the flow cytometer is constituted by, when being roughly classified, an experiment planning step (Fig. 2 "1: Plan") of examining cells as experiment targets and methods for detecting the cells and preparing an antibody reagent with a fluorescence index; a sample preparation step ("2: Preparation" in the same drawing) of actually staining and preparing the cells in a state suitable for measurement; an FCM measurement step ("3: FCM" in the same drawing) of measuring the amount of fluorescence of each of the stained cells with a flow cytometer; and a data analysis step ("4: Data Analysis" in the same drawing) of performing various types of data processing so as to obtain a desired analysis result from data recorded in the FCM measurement. Then, these steps can be repeated as necessary.

In the experiment planning step, first, which molecule (for example, an antigen, a cytokine, or the like) expression is used to determine a microparticle (mainly a cell) that is desired to be detected using the flow cytometer is determined, that is, a marker used in detection of the microparticle is determined. This determination can be made on the basis of, for example, information such as past experimental results and papers. Next, which fluorochrome is used to detect the marker is examined. Pieces of information, such as the number of markers desired to be detected simultaneously, specifications of usable FCM devices, commercially available fluorescently labeled reagents, and spectra, brightness, price, and delivery dates of fluorochromes, are comprehensively determined, and a combination of fluorescently labeled antibody reagents necessary for actual experiments is determined. This process of determining the combination of the reagents is generally referred to as panel design in FCM. Here, a reagent that is insufficient among a set of reagents determined by the panel design is ordered from a reagent manufacturer and purchased. However, the fluorescently labeled antibody reagents are expensive, and relatively rare reagents and the like sometimes require one month or more from order placement to delivery. Therefore, it is not practical to perform trial and error by repeating the four steps described above many times. It is desirable to obtain desired results with fewer experiment planning steps.

In the sample preparation step, the experiment targets are first processed into a state suitable for FCM measurement. For example, cell separation and purification can be performed. For example, for immune cells derived from blood or the like, red blood cells are removed from the blood by hemolysis and density gradient centrifugation to extract white blood cells. A group of the extracted target cells is stained using a fluorescently labeled antibody. At this time, it is generally recommended to prepare a single-stained sample that is stained with only one fluorochrome and used as a reference at the time of analysis and a non-stained sample that is not stained at all in addition to an analysis target sample stained simultaneously with a plurality of fluorochromes.

When a microparticle is optically analyzed in the FCM measurement step, first, excitation light is emitted from a light source of a light irradiation unit of the flow cytometer to irradiate the microparticle flowing in a channel. Next, fluorescence emitted from the microparticle is detected by a detection unit of the flow cytometer. Specifically, only light of a specific wavelength (target fluorescence) is separated from light emitted from the microparticle using a dichroic mirror, a bandpass filter, or the like, and the separated light is detected by a detector such as a 32-channel PMT. At this time, for example, the fluorescence is dispersed using a prism, a diffraction grating, or the like such that beams of light having different wavelengths are detected in the respective channels of the detector. Therefore, spectrum information of detected light (fluorescence) can be easily obtained. The microparticle to be analyzed is not particularly limited, and examples thereof include cells, microbeads, and the like.

The flow cytometer can have a function of recording fluorescence information of each fine particle acquired by the FCM measurement together with scattered light information, time information, and position information other than the fluorescence information. This recording function can be mainly executed by a memory or a disk of a computer. In typical cell analysis, analysis of several thousands to several millions of microparticles is performed under one experimental condition, and thus, it is necessary to record a large number of pieces of information in a state of being organized for every experimental condition.

In the data analysis step, light intensity data in each wavelength region detected in the FCM measurement step is quantified using a computer or the like, and the amount of fluorescence (intensity) for every fluorochrome used is obtained. For this analysis, a correction method using a reference calculated from experimental data is used. The reference is calculated by statistical processing using two types of measurement data of a microparticle stained with only one fluorochrome and measurement data of an unstained microparticle. The calculated amount of fluorescence can be recorded in a data recording unit provided in the computer together with information such as a name of a fluorescent molecule, a measurement date, and a microparticle type. The fluorescence amount (fluorescence spectrum data) of the sample estimated by the data analysis is stored and displayed as a graph in accordance with the purpose, and the fluorescence amount distribution of the microparticle is analyzed. For example, the proportion of detection target cells included in the measured sample can be calculated by analyzing the fluorescence amount distribution.

The present technology can be used, for example, for the panel design in the experiment planning step among the steps described above. According to the present technology, an optimized panel can be automatically generated. Furthermore, it is possible to efficiently acquire information regarding a fluorochrome necessary for panel design processing according to the present technology. Furthermore, it is also possible to reduce an influence of the notational variations in the panel design according to the present technology. Therefore, it is possible to simplify a query transmitted and received between constituent elements of the information processing system.

Furthermore, the present technology may be used in the data analysis step among the steps described above, and for example, may be used in the statistical processing, more particularly, the unmixing processing. According to the present technology, it is possible to efficiently acquire the fluorescence data necessary for the unmixing processing, for example, spectral reference data.

Furthermore, the present technology may be executed in analysis that executes information processing regarding a fluorochrome other than the flow cytometry. For example, the present technology may be applied to information processing related to a fluorochrome for analysis by a microparticle sorting device that sorts microparticles in a closed space. The device may include, for example, a chip that has a channel through which the microparticles flows and in which the microparticles are sorted, a light irradiation unit that irradiates the microparticles flowing through the channel with light, a detection unit that detects light generated by the light irradiation, and a determination unit that determines whether the microparticles are sorted on the basis of information regarding the detected light. Examples of the microparticle sorting device can include a device described in Japanese Patent Application Laid-Open No. 2020-041881 and the like.

Furthermore, the present technology may also be applied to information processing for analysis or observation of a cell sample or a tissue sample stained with a fluorochrome by a microscope device. Examples of the analysis or observation can include multi-color fluorescence imaging and the like. In recent years, there is a tendency that the number of fluorochromes to be used increases in the fluorescence imaging, and the present technology can also be used in such analysis or observation.

(3) Description of First Embodiment

An information processing system of the present technology includes: a fluorochrome database that holds fluorescence signal data of a fluorochrome associated with measuring instrument information; a reagent database that holds correspondence information regarding a correspondence between a reagent and the fluorochrome; and an information processing device that acquires the fluorescence signal data of the fluorochrome corresponding to the reagent from the fluorochrome database using the correspondence information regarding the reagent in the reagent database identified on the basis of input processing target information and performs information processing using the fluorescence signal data of the fluorochrome.

The information processing system of the present technology can efficiently acquire information regarding a fluorochrome by using the correspondence information.

(3-1) Configuration Example of Information Processing System

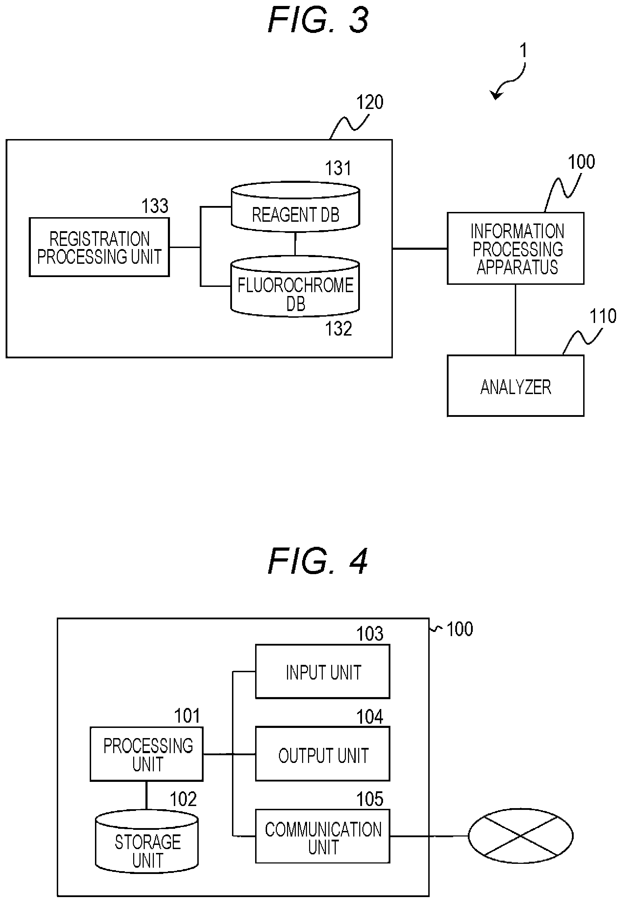

A configuration example of the information processing system of the present technology will be described with reference to Fig. 3. The information processing system of the present technology includes an information processing device 100, an analyzer 110, and a server 120. These may be connected in a wired or wireless manner via a network. These constituent elements will be described hereinafter.

A configuration example of the information processing device 100 is illustrated in Fig. 4. The information processing device 100 can include a processing unit 101, a storage unit 102, an input unit 103, an output unit 104, and a communication unit 105. The information processing device 100 may be configured using, for example, a general-purpose computer.

The processing unit 101 executes various types of information processing executed by the information processing device 100. The processing unit 101 can include, for example, a central processing unit (CPU) and a RAM. The CPU and the RAM may be connected to each other via, for example, a bus. An input/output interface may be further connected to the bus. The input unit 103, the output unit 104, and the communication unit 105 may be connected to the bus via the input/output interface.

The storage unit 102 stores various types of data. The storage unit 102 can store an operating system (for example, WINDOWS (registered trademark), UNIX (registered trademark), LINUX (registered trademark), or the like), a program for causing an information processing device or an information processing system to execute an information processing method according to the present technology, and various other programs. The storage unit 102 may also store various types of data input, generated, or output according to the present technology. The storage unit 102 can include, for example, a ROM. Furthermore, the storage unit 102 can include an HDD and/or an SSD.

The input unit 103 can include an interface configured to be capable of receiving input of various types of data. For example, the input unit 103 may be configured to be capable of receiving various types of data input in processing to be described later. Examples of the data include processing target information. The input unit 103 can include, for example, a mouse, a keyboard, a touch panel, and the like as a device that receives such an operation.

The output unit 104 can include an interface configured to be capable of outputting various types of data. For example, the output unit 104 may be configured to be capable of outputting various types of data generated in processing to be described later. The output unit 104 can include, for example, a display device as a device that outputs the data.

The communication unit 105 can be configured to connect the information processing device 100 to a network in a wired or wireless manner. The communication unit 105 enables the information processing device 100 to acquire various types of data (for example, a list related to a phosphor) via a network. The acquired data can be stored in, for example, the storage unit 102. The configuration of the communication unit 105 may be appropriately selected by those skilled in the art.

The information processing device 100 may include, for example, a drive (not illustrated) or the like. The drive can read data (for example, various types of data used in the present technology) or a program (for example, a program according to the present technology) recorded in a recording medium and output the read data or program to the RAM. The recording medium is, for example, a micro SD memory card, an SD memory card, or a flash memory, but is not limited thereto.

The analyzer 110 can be an analyzer that performs analysis of a sample labeled with a fluorochrome. Examples of such an analyzer can include, but are not limited to, a microparticle analyzer such as a flow cytometer and a microscope device that performs fluorescence imaging as described in (2) described above.

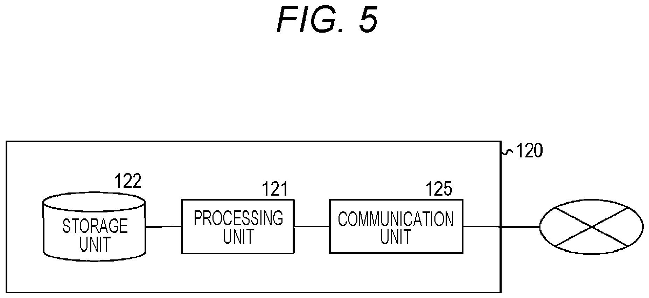

A configuration example of the server 120 is illustrated in Fig. 5. Similarly to the information processing device 100, the server 120 can include a processing unit 121, a storage unit 122, and a communication unit 125.

The server 120 includes a reagent DB 131 and a fluorochrome DB 132 illustrated in Fig. 1. These may be stored in the storage unit 122 of the server 120, for example. The server 120 may be configured to be capable of acquiring information regarding a reagent or a fluorochrome through a network. The reagent DB 131 and/or the fluorochrome DB 132 can be configured such that the information acquired in this manner can be added.

Furthermore, the server 120 includes a registration processing unit 133 illustrated in Fig. 1. The registration processing unit 133 can execute, for example, reagent registration processing. The registration processing unit 133 executes registration in the reagent DB 131 or the fluorochrome DB 132. Furthermore, the registration processing unit 133 may be configured to execute integration processing of notational variations of measurement target information, a reagent, or a fluorochrome. The processing performed by the registration processing unit 133 may be implemented by the processing unit 121. Note that the registration processing unit 133 may be referred to as an integrated processing unit in a case of executing only the integration processing without executing the reagent registration.

The processing unit 121 executes various types of information processing executed by the server 120. The processing unit 121 can include, for example, the registration processing unit 133. The processing unit 121 may be configured using, for example, a central processing unit (CPU) and a RAM, and the CPU and the RAM may be connected to each other via, for example, a bus. The processing unit 121 may be specialized for a server function.

The storage unit 122 stores various types of data. The storage unit 122 can store an operating system (for example, WINDOWS (registered trademark), UNIX (registered trademark), LINUX (registered trademark), or the like), a program for causing a server or an information processing system to execute the information processing method according to the present technology, and various other programs. The storage unit 122 may also store various types of data input, generated, or output according to the present technology. The storage unit 102 can include, for example, a ROM. Furthermore, the storage unit 122 can include an HDD and/or an SSD.

The reagent DB 131 and the fluorochrome DB 132 may be stored in one server, or may be distributed and stored in two or more servers. For example, the information processing system according to the present technology may include one server including the reagent DB 131 and the fluorochrome DB, or may include one server including the reagent DB 131 and another server including the fluorochrome DB 132.

Although the reagent DB 131 and the fluorochrome DB 132 are stored in a device (the server 120) different from the information processing device 100 in the system configuration example illustrated in Fig. 3, the reagent DB 131 and the fluorochrome DB 132 may be provided in the information processing device 100 in the present technology. For example, the reagent DB 131 and the fluorochrome DB 132 may be stored in the storage unit 102 of the information processing device 100.

Furthermore, the registration processing unit 133 is provided in the device (server 120) different from the information processing device 100 in Fig. 3, but the registration processing unit 133 may be provided in the information processing device 100 in the present technology. For example, the processing unit 101 of the information processing device 100 may be configured to execute the processing performed by the registration processing unit 133.

(3-2) Example of Processing Performed by Information Processing System (Panel Design)

(3-2-1) Example of Information Processing For Acquisition of Fluorescence Signal Data

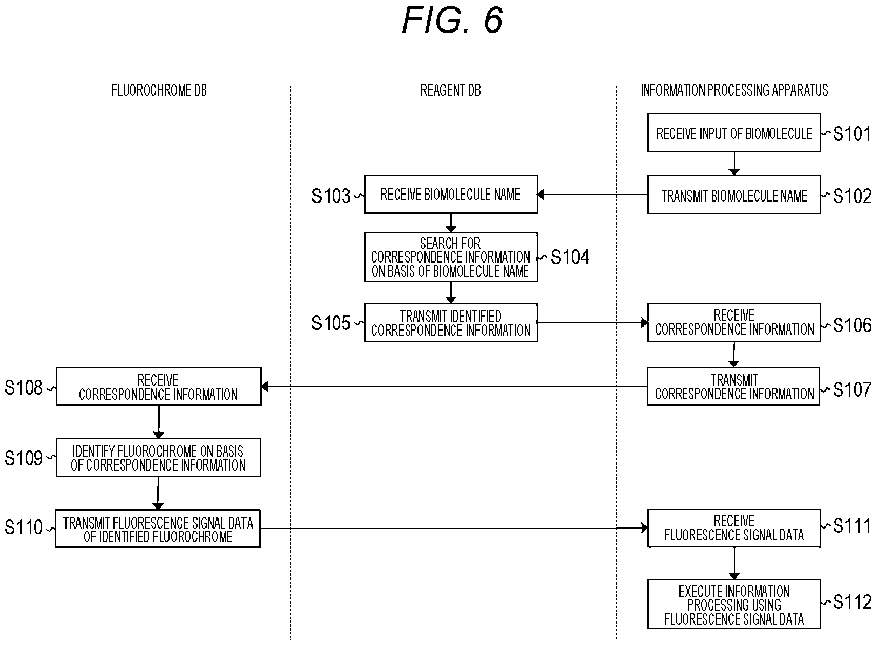

An example of information processing performed by the information processing system of the present technology will be described with reference to Fig. 6. Fig. 6 is a flowchart of the information processing.

In step S101 of Fig. 6, the information processing device 100 receives input of measurement target information. The measurement target information includes, for example, information regarding a biomolecule. The information regarding a biomolecule includes, for example, a name, an abbreviation, a number, or the like of each biomolecule. In one embodiment of the present technology, the measurement target information includes a name, an abbreviation, or a number of at least one biomolecule, and can include, for example, names, abbreviations, or numbers of 2 or more, 5 or more, or 10 or more biomolecules. A lower limit value of the number of biomolecules may be, for example, 1, 2, 5, or 10. An upper limit value of biomolecules may be, for example, 300, 200, 150, 100, or 50. A numerical range of the number of biomolecules may be a combination of values selected from the examples of the lower limit value and the examples of the upper limit value, and may be, for example, 2 to 300, 5 to 200, 5 to 150, or 5 to 100.

The information regarding a biomolecule further includes an expression amount of each biomolecule. The expression amount may be, for example, an expression level or may be a specific numerical value of an expression amount. The expression levels may be, for example, indices representing expression amounts of biomolecules in a plurality of stages, and may be, for example, levels divided into 2 to 10 stages, particularly 2 to 8 stages, more particularly 3 to 5 stages.

The measurement target information can further include measuring instrument information. The measuring instrument information is information regarding an instrument that executes measurement of a measurement target. For example, the measuring instrument information may include information regarding a flow cytometer that performs flow cytometry on a measurement target. The measuring instrument information includes, for example, at least one of a model name of the measuring instrument, a laser wavelength, or a detection wavelength range of a detector. The measuring instrument information may further include a product number, a manufacturer name, a manufacturing number, a name of a component attached to the measuring instrument, a software name used by the measuring instrument, and the like.

In step S101, the processing unit 101 of the information processing device 100 may perform necessary processing on the received measurement target information. The processing may be, for example, categorizing biomolecules on the basis of expression amounts.

In step S102, the information processing device 100 transmits the measurement target information to the server 120. The measurement target information may include, for example, a biomolecule name. The biomolecule name may be, for example, an antigen and/or a cytokine.

In step S103, the server 120 receives the measurement target information.

In step S104, the server 120 executes search processing on the reagent DB 121 in response to the reception of the measurement target information. For example, the server 120 searches the reagent DB 121 using a biomolecule name in the measurement target information as a keyword, and identifies correspondence information including the biomolecule name. For this identification, the correspondence information may include, for example, information indicating a correspondence between a biomolecule and a reagent.

The correspondence information may include, for example, information indicating a correspondence between a biomolecule and a reagent, particularly, information regarding a biomolecule and a reagent that captures the biomolecule. The reagent can be, for example, a fluorochrome-labeled antibody.

The correspondence information may further include information indicating a correspondence between a reagent and a fluorochrome, particularly, information indicating a correspondence between a reagent and a fluorochrome constituting the reagent.

For example, one piece of correspondence information may include a name, an abbreviation, or a number of one reagent, a name, an abbreviation, or a number of a biomolecule captured by the one reagent, and a name, an abbreviation, or a number of a fluorochrome included in the reagent.

With the correspondence information, the reagent can be identified on the basis of the input biomolecule name, and further, the fluorochrome included in the reagent can be identified. Furthermore, it is also possible to search the fluorochrome DB on the basis of the identified fluorochrome.

Note that, a name, an abbreviation, and a number of a reagent are sometimes collectively referred to as a "reagent name" in the present specification. Similarly, a name, an abbreviation, and a number of a biomolecule are sometimes referred to as a "biomolecule name". Similarly, a name, an abbreviation, or a number of a fluorochrome is sometimes referred to as a "fluorochrome name".

The reagent is, for example, an antibody labeled with a fluorochrome, and in this case, the correspondence information can include information regarding the fluorochrome (for example, a name, an abbreviation, a number, or the like of the fluorochrome) and information regarding the antibody (for example, a name, an abbreviation, or a number of the antibody, or a name, an abbreviation, or a number of an antigen captured by the antibody). One piece of correspondence information may correspond to one reagent, that is, one piece of the correspondence information can include information regarding an antibody constituting one fluorochrome-labeled antibody and information regarding a fluorochrome. Therefore, for example, a reagent that captures a biomolecule can be identified by a name or an abbreviation of the biomolecule that needs to be captured by an antibody.

The reagent DB 131 may include a plurality of pieces of the correspondence information. The plurality of pieces of correspondence information may constitute a data table, and the data table is also referred to as a correspondence information data table in the present specification.

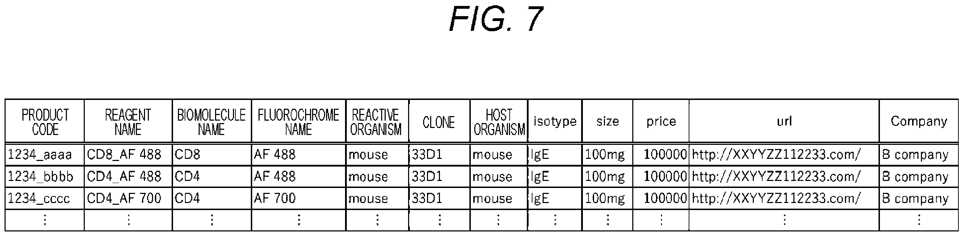

An example of the correspondence information data table included in the reagent DB 131 will be described with reference to Fig. 7. The data table illustrated in Fig. 7 is a data table listing fluorochrome-labeled antibodies as reagents. One piece of correspondence information is described in each row. One piece of correspondence information includes a product number of a reagent (product code column), a name of the reagent (reagent name column), a name of a biomolecule captured by the reagent (biomolecule name column), a fluorochrome name included in the reagent (fluorochrome name column), a name of an organism from which the biomolecule captured by the reagent is derived (reactive organism column), a name of a clone from which the reagent is generated (clone column), a name of an organism from which the reagent is derived (host organism column), an isotype of an antibody (an isotype column), a size (an amount of the reagent, a size column), a price of the reagent (price column), a web page URL related to the reagent (URL column), and a name of a manufacturer or a sales company of the reagent (company column).

It is preferable that each piece of the correspondence information includes a name of a biomolecule captured by a reagent and a name of a fluorochrome included in the reagent. Therefore, it is possible to identify a fluorochrome using the fluorochrome DB. More preferably, each piece of the correspondence information can include a name and/or a product number of a reagent.

In this manner, in the present technology, a name of at least one of a reagent, a biomolecule, or a fluorochrome and/or at least one of a reactive organism, a host organism, an isotype of an antibody, a size, a price, or a sales company may be registered in the reagent database.

In step S104, the server 120 (particularly, the processing unit 121) searches the reagent DB 131 using the biomolecule name received in step S103. Then, the processing unit 121 identifies correspondence information including the biomolecule name. Here, the processing unit 121 may identify one piece of correspondence information or may identify two or more pieces of correspondence information.

(Reference to Integration Processing Table)

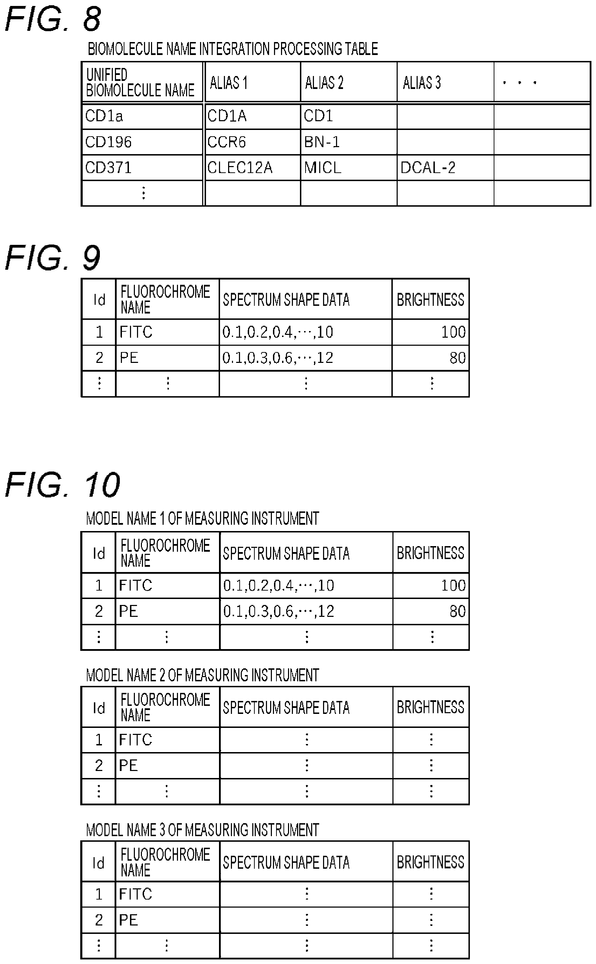

In one embodiment of the present technology, the server 120 (particularly, the registration processing unit 133) can identify correspondence information with reference to a biomolecule name integration processing table for processing of notational variations of a biomolecule name. An example of the table is illustrated in Fig. 8. As illustrated in Fig. 8, in the table, one or more aliases (Alias 1 column, Alias 2 column, and so on) are associated with one unified name (unified biomolecule name column) used in the processing performed by the server 120. For example, a unified name "CD1a" is associated with aliases "CD1A" and "CD1", and a unified name "CD196" is associated with "CCR6" and "BN-1". In this manner, the table has a plurality of pieces of data each including one unified name and one or more aliases associated with the unified name.

In this embodiment, the server 120 (particularly, the registration processing unit 133) may identify correspondence information with reference to the table in step S104.

For example, in a case where the biomolecule name received in step S103 does not exist in the reagent DB 131, the server 120 identifies an unified name associated with the biomolecule name with reference to the biomolecule name integration processing table. Then, the server 120 can search the reagent DB 131 using the unified name and identify correspondence information including the unified name. The identified correspondence information is used in step S105.

Note that in a case where the biomolecule name received in step S103 exists in the reagent DB 131, the server 120 (particularly, the registration processing unit 133) can identify correspondence information including the biomolecule name in the reagent DB 131 without referring to the biomolecule name integration processing table. The identified correspondence information is used in step S105.

In step S105, the server 120 transmits the correspondence information identified in step S104 to the information processing device 100. In step S105, the correspondence information transmitted by the server 120 can include, for example, a name or an abbreviation of a reagent and a name or an abbreviation of a fluorochrome included in the reagent. The correspondence information transmitted by the server 120 may further include one or more pieces of information included in the correspondence information data table described above, such as a name of a biomolecule captured by an antibody included in the reagent. The correspondence information transmitted by the server 120 may directly use one piece of correspondence information constituting the correspondence information data table.

In step S106, the information processing device 100 receives the correspondence information from the server 120. Through steps S103 to S106 described above, the information processing device 100 searches the reagent database on the basis of the biomolecule and identifies the reagent corresponding to the biomolecule.

In step S107, the information processing device 100 transmits the correspondence information received in step S106 to the server 120. The correspondence information to be transmitted can include information regarding a fluorochrome included in the reagent (for example, a name, an abbreviation, or a number of a fluorochrome). Furthermore, the correspondence information may further include a name, an abbreviation, or a number of the reagent.

In a preferred embodiment, in step S107, the information processing device 100 can also transmit at least one of information regarding a measurement target to be described later or measuring instrument information to the server 120 as well as the correspondence information. The measuring instrument information is information regarding a measuring instrument that performs measurement using the reagent, and can include, for example, at least one of a model name of the measuring instrument, a laser wavelength, or a detection wavelength range of a detector. Therefore, among pieces of fluorescence signal data included in the fluorochrome DB 132, fluorescence signal data of a fluorochrome associated with the measuring instrument can be identified.

In step S108, the server 120 receives the correspondence information. Furthermore, the server 120 can also receive information regarding the measurement target to be described later and the measuring instrument information.

In step S109, the server 120 identifies a fluorochrome corresponding to the correspondence information from among fluorochromes included in the fluorochrome DB on the basis of the received correspondence information. For example, the server 120 identifies fluorescence signal data corresponding to the fluorochrome name included in the correspondence information.

The fluorochrome DB 132 includes fluorescence signal data of a fluorochrome. The fluorochrome DB 132 can include, for example, a fluorochrome data table including a plurality of pieces of the fluorescence signal data.

The fluorescence signal data may include, for example, fluorescence spectrum data of a fluorochrome. The fluorescence signal data enables panel design processing to be described later.

The fluorescence signal data may further include brightness data of fluorescence generated from a fluorochrome. It is possible to design a better panel from a viewpoint of separation performance, for example, on the basis of the fluorescence spectrum data and the brightness data.

An example of the fluorochrome data table included in the fluorochrome DB 132 will be described with reference to Fig. 9. The data table illustrated in Fig. 9 is a data table listing pieces of information regarding fluorescence signals of fluorochromes. One piece of fluorescence signal data is described in each row. One piece of fluorescence signal data includes a name of a fluorochrome (fluorochrome name column), fluorescence spectrum data (spectrum shape data column), and brightness data (brightness column). Preferably, each piece of the fluorescence signal data includes a fluorochrome name and fluorescence spectrum data. In this manner, the fluorochrome database used in the present technology may be an aggregate of pieces of fluorescence signal data each including a name of a fluorochrome, fluorescent spectrum data of the fluorochrome, and brightness of the fluorochrome. The use of such a fluorochrome database enables panel design using the fluorescence spectrum data and generation of a panel with improved separation performance.

Furthermore, the fluorochrome DB 132 can include at least one of information regarding a measurement target or measuring instrument information. The information regarding a measurement target can include at least one of a target organism or the degree of expression of a biomolecule. Furthermore, the measuring instrument information can include at least one of the number or wavelengths of excitation light sources of a measuring instrument, the number, types, or exposure gains of detectors (particularly, photodetectors) included in the measuring instrument, and a flow rate in a sample flow channel included in the measuring instrument. The channel can be, for example, a channel through which light irradiation is performed on particles in a sample and light generated by the light irradiation is detected. For example, the channel can be a channel through which light irradiation for flow cytometry is performed. Therefore, the server 120 can identify fluorescence signal data corresponding to the information regarding the measurement target and the measuring instrument information on the basis of these pieces of information and the information received in step S109.

In a preferred embodiment of the present technology, fluorescence signal data may be associated with measuring instrument information. Since measurement data regarding fluorescence generated from a fluorochrome can vary depending on a measuring instrument, the association enables panel design in consideration of the measuring instrument.

The measuring instrument information is information regarding a measuring instrument that performs measurement using a reagent, and may include, for example, at least one of a model name of the measuring instrument, a laser light wavelength, or a detection wavelength range of a detector. Preferably, a type of the measuring instrument information associated with the fluorescence signal data is the same as a type of the measuring instrument information transmitted by the information processing device 100 in step S107. Therefore, measuring instrument information corresponding to the latter measuring instrument information can be identified in the fluorochrome DB 132.

The fluorochrome DB 132 can include a plurality of pieces of fluorescence signal data respectively associated with a plurality of types of measuring instruments per fluorochrome. The plurality of types of measuring instruments may correspond to different model names, or may correspond to another measuring instrument information (for example, the number of fluorescence detectors or the number of lasers).

For example, the fluorochrome DB 132 can include a fluorochrome data table associated with each of the plurality of types of measuring instruments. That is, a fluorochrome data table may be prepared for each measuring instrument in the fluorochrome DB 132. For example, as illustrated in Fig. 10, fluorochrome data tables respectively related to Measuring Instruments 1 to 3 may be prepared. As illustrated in Fig. 10, the plurality of types of measuring instruments may be identified by model names, but may be identified by another measuring instrument information (for example, the number or type of fluorescence detectors or the number or wavelengths of excitation lasers).

Alternatively, a plurality of pieces of fluorescence signal data respectively associated with a plurality of types of measuring instruments may be included in one fluorochrome data table per fluorochrome.

(Reference to Integration Processing Table)

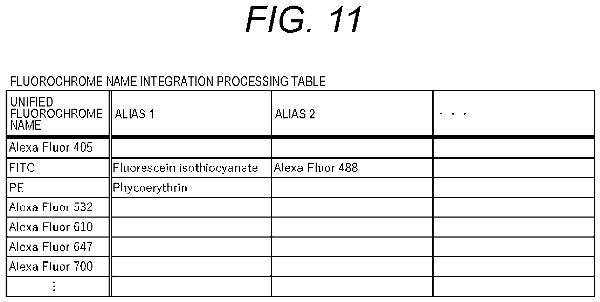

In one embodiment of the present technology, the server 120 can identify a fluorochrome with reference to a fluorochrome name integration processing table for processing of notational variations of a fluorochrome name. An example of the table is illustrated in Fig. 11. As illustrated in Fig. 11, in the table, one or more aliases (Alias 1 column, Alias 2 column, and so on) are associated with one unified name (unified fluorochrome name column) used in the processing performed by the server 120. For example, a unified name "FITC" is associated with aliases "Fluorescein isothiocyanate" and "Alexa Fluor 488", and a unified name "PE" is associated with "Phycoerythrin". Note that FITC and Alexa Fluor 488 are not completely the same fluorochromes, but have almost the same fluorescence spectrum. In the table, two fluorochromes having substantially the same fluorescence spectrum may be associated with each other by one unified name.

As described above, the table has a plurality of pieces of data each including one unified name and one or more aliases associated with the unified name.

In this embodiment, in step S109, the server 120 may identify a fluorochrome with reference to the table.

For example, in a case where a fluorochrome name included in the correspondence information received in step S108 does not exist in the fluorochrome DB 132, the server 120 identifies a unified name associated with the fluorochrome name with reference to the fluorochrome name integration processing table. Then, the server 120 can search the fluorochrome DB 132 using the unified name and identify a fluorochrome having the unified name.

Note that, in a case where a fluorochrome name included in the correspondence information received in step S108 exists in the fluorochrome DB 132, the server 120 can identify a fluorochrome in the fluorochrome DB 132 without referring to the fluorochrome name integration processing table.

In step S110, the server 120 transmits fluorescence signal data of the fluorochrome identified in step S109 to the information processing device 100. Preferably, the transmitted fluorescence signal data includes fluorescence spectrum data. Therefore, panel design using the fluorescence spectrum data becomes possible, and a panel with improved separation performance can be generated.

In step Sill, the information processing device 100 receives the fluorescence signal data transmitted from the server 120. Through steps S107 to Sill described above, the information processing device 100 acquires, from the fluorochrome database, the fluorescence signal data of the fluorochrome associated with the measuring instrument information among the fluorochromes associated with the reagent.

In step S112, the information processing device 100 executes information processing using the fluorescence signal data. The information processing may be information processing of executing panel design. Regarding examples of the information processing related to the panel design, (3-2-3) below is desirably referred to. The information processing device 100 can generate recommendation information of a reagent corresponding to a biomolecule input by the information processing (particularly, panel design information processing). The recommendation information of a reagent may include information regarding the reagent associated with a combination of the biomolecule and a fluorochrome corresponding to the biomolecule acquired by the information processing. Then, the information processing device 100 can output the recommendation information of the reagent corresponding to the biomolecule by the information processing.

As in the above processing flow, in the present technology, the information processing device 100 can receive the correspondence information from the reagent database, and then, acquire the fluorescence signal data of the fluorochrome corresponding to the reagent from the fluorochrome database using the received correspondence information.

(3-2-2) Another Example of Information Processing For Acquisition of Fluorescence Signal Data

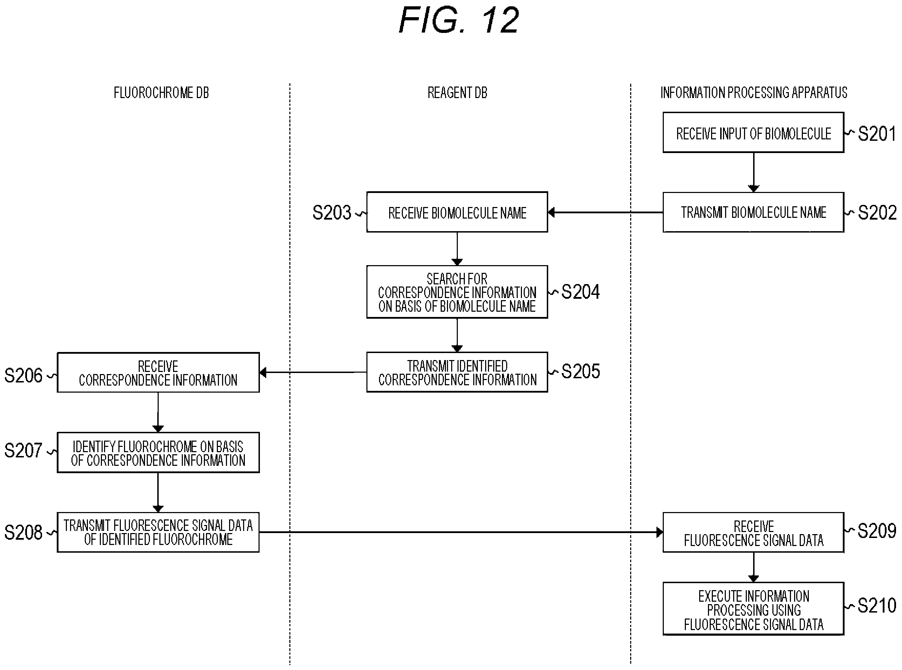

An example of information processing performed by the information processing system of the present technology will be described with reference to Fig. 12. Fig. 12 is a flowchart of the information processing.

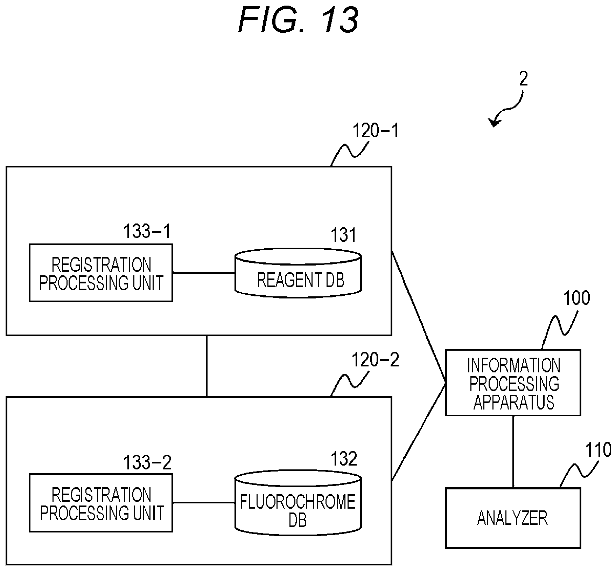

In this flow example, the reagent DB 131 and the fluorochrome DB 132 can be stored in two servers, respectively. Fig. 13 illustrates a configuration example of an information processing system of the present technology including two servers. As illustrated in Fig. 13, an information processing system 2 of the present technology includes the information processing device 100, the analyzer 110, and servers 120-1 and 120-2. The server 120-1 includes the reagent DB 131, and the server 120-2 includes the fluorochrome DB 132. Since the description in (3-1) described above applies to these constituent elements, the description thereof will be omitted.

Steps S201 to S204 in Fig. 12 are similar to steps S101 to S104 in (3-2-1) described above with reference to Fig. 6 except that the server 120-1 is used instead of the server 120, and the description thereof applies.

In step S205, the server 120-1 transmits the correspondence information identified in step S204 to the server 120-2. In step S205, the correspondence information transmitted by the server 120-1 can include, for example, a name or an abbreviation of a reagent and a name or an abbreviation of a fluorochrome included in the reagent. The correspondence information transmitted by the server 120-1 may further include one or more pieces of information included in the correspondence information data table described above, such as a name of a biomolecule captured by an antibody included in the reagent. The correspondence information transmitted by the server 120-1 may directly use one piece of correspondence information constituting the correspondence information data table.

In step S206, in the server 120-2, the information processing device 100 receives the correspondence information from the server 120-1.

Steps S207 to S210 are similar to steps S109 to S112 in (3-2-1) described above with reference to Fig. 6 except that the server 120-1 is used instead of the server 120, and the description thereof applies to steps S207 to S210.

As in the above processing flow, in the present technology, the information processing device 100 may acquire fluorescence signal data of the fluorochrome corresponding to the reagent from the fluorochrome database without receiving the correspondence information from the reagent database.

(3-2-3) Example of Panel Design Information Processing Including Fluorescence Signal Data Acquisition Processing

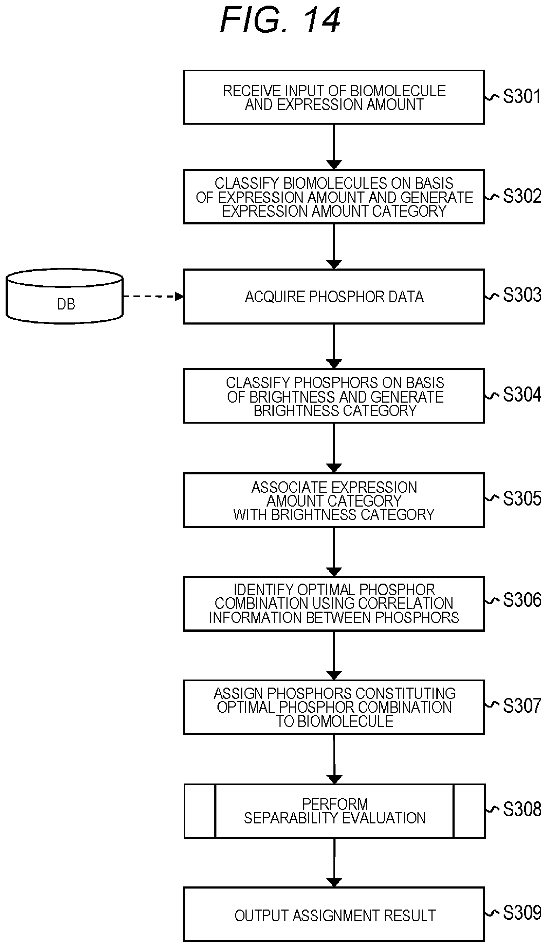

The information processing for fluorescence signal data acquisition described in (3-2-1) and (3-2-2) described above may be performed as a part of information processing of executing panel design. Hereinafter, an example of the panel design processing including the KEIO signal data acquisition processing will be described with reference to Fig. 14. Fig. 14 is a flowchart of the panel design information processing. The following description relates to an application example of the present technology in a case of optimizing a combination of an antibody and a fluorochrome used in flow cytometry.

Note that, among steps to be described hereinafter, step S301 corresponds to steps S101 and 201 in (3-2-1) and (3-2-2) described above.

Furthermore, step S303 corresponds to steps S102 to S111 and S202 to S209 in (3-2-1) and (3-2-2) described above.

Furthermore, step S304 and the subsequent steps correspond to steps S112 and S210 in (3-2-1) and (3-2-2) described above.

In step S301 of Fig. 14, the information processing device 100 (particularly, the input unit 103) receives input of a plurality of biomolecules and expression amounts of the plurality of biomolecules.

The biomolecule may be an antigen as a measurement target in flow cytometry (for example, a surface antigen, a cytokine, or the like), or may be an antibody that captures an antigen as a measurement target. In a case where the plurality of biomolecules is antigens, the expression amounts may be expression amounts of the antigens. In a case where the plurality of biomolecules is antibodies, the expression amounts may be expression amounts of antigens captured by the antibodies.

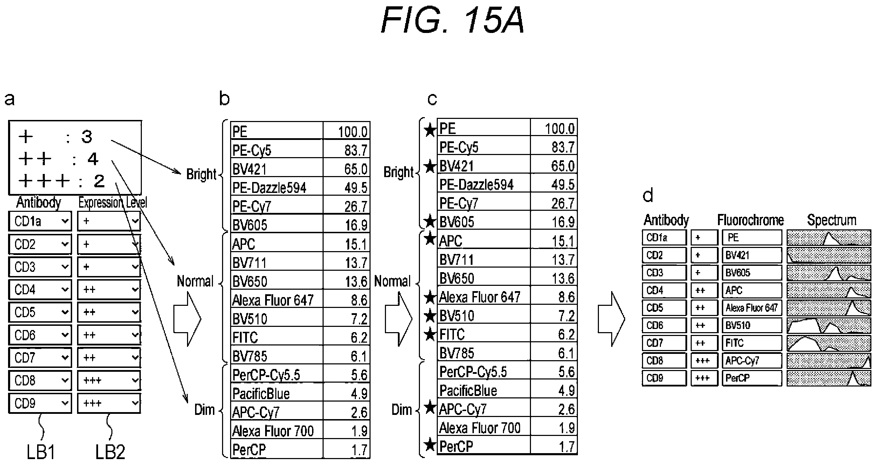

The processing unit 101 can display an input reception window, configured to receive the input, on the output unit 104 (particularly, display device) to prompt the user to perform the input. The input reception window may include, for example, a biomolecule input reception field and an expression amount reception field such as an "Antibody" field and an "Expression level" field illustrated in a of Fig. 15A. In this manner, the information processing system of the present technology may include the output unit that displays the screen prompting input of measurement target information.

The biomolecule input reception field may be, for example, a plurality of list boxes LB1 prompting selection of biomolecules as illustrated in the "Antibody" field in a of Fig. 15A. In a of Fig. 15A, nine list boxes are described for convenience of the description, but the number of list boxes is not limited thereto. The number of list boxes may be, for example, 5 to 300 or 10 to 200.

When the user enables each of the list boxes by an operation, for example, clicking, touching, or the like, the processing unit 101 displays a list of options of biomolecules above or below the list boxes. When the user selects one biomolecule from the list, the list is closed, and the selected biomolecule is displayed.

In Fig. 15A, a screen after the selection of the biomolecule performed by the user is displayed. When antigens to be captured by antibodies are selected, for example, "CD1a", "CD2" and the like are displayed as illustrated in the same drawing.

Furthermore, the expression amount reception field may be, for example, a plurality of list boxes LB2 prompting selection of expression amounts as illustrated in the "Expression level" field in a of Fig. 15A. The number of the list boxes LB2 prompting selection of expression amounts may be the same as the number of the list boxes LB1 prompting selection of biomolecules. In a of Fig. 15A, nine list boxes are described for convenience of the description, but the number of list boxes is not limited thereto. The number of list boxes may be, for example, 5 to 300 or 10 to 200.

When the user enables each of the list boxes by an operation, for example, clicking, touching, or the like, the processing unit 101 displays a list of options of expression amounts above or below the list boxes. When the user selects one biomolecule from the list, the list is closed, and the selected expression amount is displayed.

In a of Fig. 15A, a screen after the selection of the expression amounts performed by the user is displayed. When expression levels are selected, for example, "+", "++", and "+++" are displayed as illustrated in the same drawing. In a of Fig. 15A, for example, "+" is selected as an expression amount of the biomolecule "CD1a". Furthermore, "++" is selected as an expression amount of a biomolecule "CD4". The symbols "+", "++", and "+++" mean that the expression amount increases in this order.

In the present specification, the "expression amount" may mean, for example, an expression level or may be a specific numerical value of an expression amount. Preferably, as illustrated in a of Fig. 15A, the expression amount means the expression level. The expression levels may be divided into preferably 2 to 20 stages, more preferably 2 to 15 stages, and still more preferably 2 to 10 stages, and may be divided into, for example, 3 to 10 stages.

For example, when the user clicks a selection completion button (not illustrated) in the input reception window after the selection of biomolecules and expression amounts is completed as described above, the processing unit 101 receives the input of the selected biomolecules and expression amounts.

In step S302, the processing unit 101 classifies the plurality of biomolecules selected in step S301 on the basis of the expression amount selected for each biomolecule, and generates one or a plurality of expression amount categories, particularly the plurality of expression amount categories. The number of expression amount categories may be, for example, a value corresponding to the number of expression levels, and may be preferably 2 or more, and more preferably 3 or more. The number may be preferably 2 to 20, preferably 3 to 15, and even more preferably 3 to 10.

In a of Fig. 15A, the expression level "+", "++", or "+++" is selected for each of the plurality of biomolecules. The processing unit 101 classifies a biomolecule with the selected expression level "+" into an expression amount category "+". Similarly, the processing unit 101 classifies biomolecules with the selected expression level "++" or "+++" into an expression amount category "++" or an expression amount category "+++", respectively. In this manner, the processing unit 101 generates three expression amount categories. Each of the expression amount categories includes a biomolecule for which a corresponding expression level has been selected. In a of Fig. 15A, three biomolecules with the expression level "+", four biomolecules with the expression level "++", and two biomolecules with the expression level "+++" are input.

In step S303, the processing unit 101 acquires a list of phosphors capable of labeling the biomolecules input in step S301. The list of the phosphors may be acquired, for example, from a database existing outside the information processing device 100 via the communication unit 105, or may be acquired from a database stored inside the information processing device 100 (for example, the storage unit 102).

The list related to the phosphors may include, for example, a name and brightness for each of the phosphors. Furthermore, the list related to the phosphors preferably also includes a fluorescence spectrum of each of the phosphors. The fluorescence spectrum of each of the phosphors may be acquired from a database as data different from the list.

Preferably, the list may selectively include phosphors that can be used in a device (for example, a microparticle analyzer) in which a sample is analyzed using a combination of a biomolecule and a phosphor. When phosphors unusable in the device are deleted from the list, it is possible to reduce burden on the device in processing to be described later (particularly, correlation information calculation processing).

In step S304, the processing unit 101 classifies the phosphors included in the list related to the phosphors acquired in step S303 on the basis of the brightness of each of the phosphors, and generates one or a plurality of brightness categories, particularly the plurality of brightness categories.

In step S304, preferably, the processing unit 101 generates brightness categories with reference to the expression amount categories generated in step S302. Therefore, it is possible to more efficiently associate the generated brightness category with the expression amount category and generate a combination of a biomolecule and a phosphor. A specific content of the reference will be described hereinafter.

The classification based on the brightness may be classification based on a fluorescence amount or a fluorescence intensity. In order to perform the classification, for example, a numerical range of the fluorescence amount or the fluorescence intensity may be associated with each brightness category. Then, the processing unit 101 can refer to a fluorescence amount or a fluorescence intensity of each of the phosphors and classify each of the phosphors included in the list into a brightness category associated with a numerical range including the fluorescence amount or the fluorescence intensity.

Preferably, in step S304, the processing unit 101 generates brightness categories with reference to the number of the expression amount categories generated in step S302. Particularly preferably, in step S304, the processing unit 101 generates the same number of brightness categories as the number of the expression amount categories generated in step S302. Therefore, the expression amount category and the brightness category can be associated on a one-to-one basis. In addition, it is possible to prevent generation of a phosphor that is not considered in generation of a combination list to be described later, and to generate a better combination. The number of the brightness categories may be, for example, a value corresponding to the number of the expression amount categories, and may be preferably 2 or more, and more preferably 3 or more. The number may be preferably 2 to 20, preferably 3 to 15, and even more preferably 3 to 10.

For example, as illustrated in b of Fig. 15A, three brightness categories (Bright, Normal, and Dim) may be generated. In these three brightness categories, the brightness decreases in this order, that is, all phosphors included in "Bright" are brighter than all phosphors included in "Normal", and all the phosphors included in "Normal" are brighter than all phosphors included in "Dim".

Preferably, in step S304, the processing unit 101 generates brightness categories with reference to the number of biomolecules included in each of the expression amount categories generated in step S302. Particularly preferably, in step S304, the processing unit 101 classifies phosphors into each of the brightness categories such that phosphors equal to or more than the number of biomolecules included in the expression amount category generated in step S302 are included in the associated brightness category. Therefore, it is possible to prevent generation of a biomolecule to which a phosphor is not assigned in generation of the combination list to be described later.

In step S305, the processing unit 101 associates the expression amount categories generated in step S302 with the brightness categories generated in step S304. Preferably, the processing unit 101 associates one expression amount category with one brightness category. Furthermore, the processing unit 101 can perform the association such that the expression amount category and the brightness category are associated on a one-to-one basis. That is, the association can be performed such that two or more expression amount categories are not associated with one brightness category.

In a particularly preferred embodiment of the present technology, the processing unit 101 can execute the association such that an expression amount category having a smaller expression amount is associated with a brightness category having a higher brightness. For example, the processing unit 101 can associate an expression amount category having the smallest expression amount with a brightness category having the highest brightness, and then, associate an expression amount category having the second smallest expression amount with a brightness category having the second highest brightness, and repeat this association in a similarly manner until no expression amount category remains. Conversely, the processing unit 101 can associate an expression amount category having the largest expression amount with a brightness category having the lowest brightness, and then, associate an expression amount category having the second largest expression amount with a brightness category having the second lowest brightness, and repeat this association in a similarly manner until no expression amount category remains.

In this embodiment, the processing unit 101 associates the expression amount categories "+", "++", and "+++" with the brightness categories "Bright", "Normal", and "Dim", respectively, for example, as indicated by arrows between a and b in Fig. 15A.

As described above, the expression amount categories generated in the present technology may be preferably associated with the brightness categories such that an expression amount category in which biomolecules exhibiting a smaller expression amount have been classified is associated with a brightness category in which brighter phosphors have been classified.

In step S306, the processing unit 101 identifies an optimal phosphor combination using correlation information between phosphors. The optimal phosphor combination is, for example, an optimal phosphor combination from a viewpoint of a correlation between fluorescence spectra, more particularly, may be a phosphor combination that is optimal from a viewpoint of a correlation coefficient between fluorescence spectra, and even more particularly, may be a phosphor combination that is optimal from a viewpoint of a square of the correlation coefficient between fluorescence spectra. The correlation coefficient may be, for example, any of a Pearson correlation coefficient, a Spearman correlation coefficient, or a Kendall correlation coefficient, and is preferably the Pearson correlation coefficient.

The correlation information between phosphors may be preferably correlation information between fluorescence spectra. That is, in one preferred embodiment of the present technology, the processing unit 101 identifies an optimal phosphor combination using the correlation information between fluorescence spectra.

For example, a Pearson correlation coefficient between two fluorescence spectra X and Y can be calculated as follows.

First, the fluorescence spectra X and Y can be expressed, for example, as follows.

Fluorescence spectrum X = ($X_1$, $X_2$, •••, and $X_{320}$); Average value = $\mu_x$; and Standard deviation = $\sigma_x$ (Here, $X_1$ to $X_{320}$ are fluorescence intensities at 320 different wavelengths. The average value $\mu_x$ is an average value of these fluorescence intensities. The standard deviation $\sigma_x$ is a standard deviation of these fluorescence intensities.)

Fluorescence spectrum Y = ($Y_1$, $Y_2$, •••, $Y_{320}$); Average value = $\mu_y$; and Standard deviation = $\sigma_y$ (Here, $Y_1$ to $Y_{320}$ are fluorescence intensities at 320 different wavelengths. The average value $\mu_y$ is an average value of these fluorescence intensities. The standard deviation $\sigma_x$ is a standard deviation of these fluorescence intensities.)

Note that the numerical value "320" is a value set for convenience of the description, and a numerical value used in calculation of the correlation coefficient is not limited thereto. The numerical value may be appropriately changed in accordance with a configuration of a fluorescence detector, for example, the number of PMTs (photomultiplier tubes) used for fluorescence detection.

A Pearson correlation coefficient R between the fluorescence spectra X and Y is obtained by the following Formula 1.

[Formula 1]

$$R = \frac{\sum Z_{Xn} Z_{Yn}}{N}$$

In the expression of Formula 1, $Z_{Xn}$ (n is 1 to 320) is a standardized fluorescence intensity and is expressed as follows.

$$Zx1 = (X_1 - \mu_x) \div \sigma_x, \ Zx2 = (X_2 - \mu_x) \div \sigma_x, \ \bullet\bullet\bullet, \ \text{and}$$
$$Zx320 = (X_{320} - \mu_x) \div \sigma_x$$

Similarly, $Z_{Yn}$ (n is 1 to 320) is also expressed as follows.

$$Zy1 = (Y_1 - \mu_y) \div \sigma_y, \ Zy2 = (Y_2 - \mu_y) \div \sigma_y, \ \bullet\bullet\bullet, \ \text{and}$$
$$Zy320 = (Y_{320} - \mu_y) \div \sigma_y$$

Furthermore, N is the number of pieces of data in the expression of Formula 1.

An example of how to identify the optimal phosphor combination will be described hereinafter.

The processing unit 101 selects, from a certain brightness category, the same number of phosphors as the "number of biomolecules belonging to an expression amount category associated with the certain brightness category". The phosphor selection is executed for all the brightness categories. Therefore, the same number of phosphors as the "number of a plurality of biomolecules used for sample analysis" are selected, and one phosphor combination candidate is obtained.

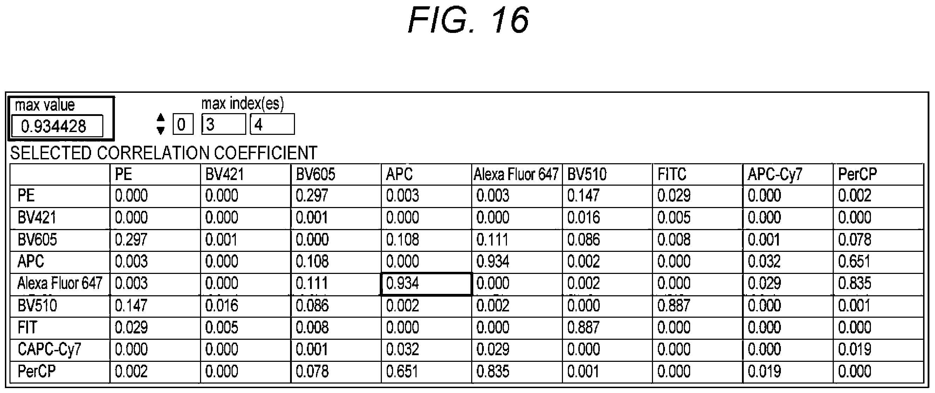

Next, the processing unit 101 calculates a square of a correlation coefficient (for example, Pearson correlation coefficient) between fluorescence spectra for a combination of any two phosphors included in the phosphor combination candidate. The processing unit 101 performs such a calculation of a square of a correlation coefficient for all combinations. Through the calculation processing, the processing unit 101 obtains a matrix of correlation coefficient square values as illustrated in Fig. 16, for example. Then, the processing unit 101 identifies the maximum correlation coefficient square value from the matrix of correlation coefficient square values. For example, in Fig. 16, a correlation coefficient between a fluorescence spectrum of Alexa Fluor 647 and a fluorescence spectrum of APC is 0.934, and the processing unit 101 identifies this value as the maximum correlation coefficient square value (a portion surrounded by a rectangle in the upper left of the same drawing).

Note that a smaller correlation coefficient square value means that two phosphor spectra are less similar. That is, two phosphors having the maximum correlation coefficient square value can mean that the two phosphors have the most similar fluorescence spectra among the phosphors included in the phosphor combination candidate.

Through the above processing, the processing unit 101 identifies the maximum correlation coefficient square value for one phosphor combination candidate.

Here, in a case where the "number of phosphors belonging to a certain brightness category" is larger than the "number of biomolecules belonging to an expression amount category associated with the certain brightness category", there is a plurality of combinations of phosphors selected from the certain brightness category. For example, there are six phosphor combinations (= $_4C_2$) in a case where two phosphors are selected from four phosphors. Therefore, for example, in a case where there are three brightness categories, four phosphors belong to any of the three brightness categories, and two phosphors are selected from each of the brightness categories, there are 216 phosphor combination candidates of $6 \times 6 \times 6$.

In the present technology, the processing unit 101 identifies the maximum correlation coefficient square value as described above for all possible phosphor combination candidates. For example, in a case where there are 216 phosphor combination candidates, the processing unit 101 identifies the maximum correlation coefficient square value of each of the 216 phosphor combination candidates. Then, the processing unit 101 identifies a phosphor combination candidate having the smallest identified maximum correlation coefficient square value. The processing unit 101 identifies the phosphor combination candidate identified in this manner as the optimal phosphor combination.

An identification result of the optimal phosphor combination is illustrated in c of Fig. 15A. In c of Fig. 15A, phosphors constituting the identified optimal phosphor combination are marked with stars.

Note that, in a case where there are two or more phosphor combination candidates having the smallest maximum correlation coefficient square value, the processing unit 101 can compare the second largest correlation coefficient square values for the two or more phosphor combination candidates, and identify a phosphor combination candidate having the second largest correlation coefficient square value that is smaller as the optimal phosphor combination. In a case where the second largest correlation coefficient square values are the same, the third largest correlation coefficient square values can be compared.

Although the maximum correlation coefficient square values are referred to in order to identify the optimal phosphor combination in the above description, what is referred to in order to identify the optimal phosphor combination is not limited thereto. For example, an average value or a total value from the largest value to the n-th (here, n may be any positive number, for example, 2 to 10, particularly 2 to 8, and more particularly 2 to 5) largest value among correlation coefficient square values may be referred to. The processing unit 101 may identify a phosphor combination candidate having the smallest average value or the smallest total value as the optimal phosphor combination.

In step S307, the processing unit 101 assigns the phosphors constituting the optimal phosphor combination identified in step S306 to a plurality of biomolecules. More specifically, the processing unit 101 assigns each of the phosphors constituting the optimal phosphor combination to a biomolecule belonging to an expression amount category associated with a brightness category to which the phosphor belongs.

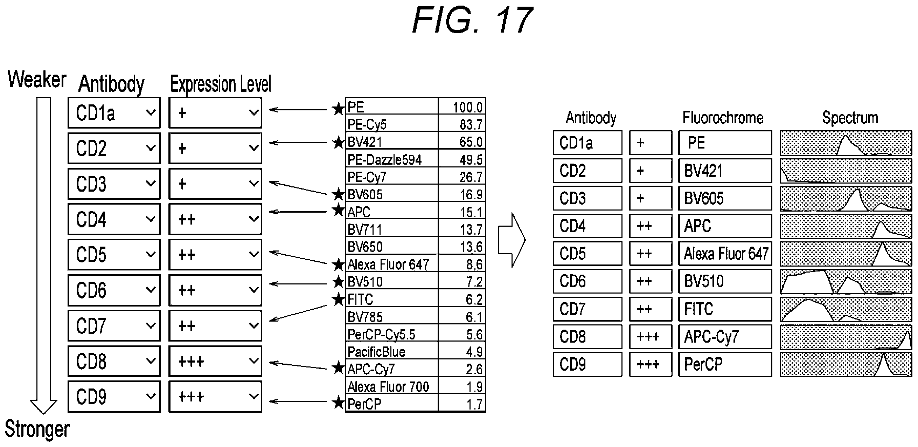

In a case where two or more phosphors are included in one brightness category, two or more biomolecules can be included in the associated expression amount category as well. In this case, a phosphor having a higher brightness may be assigned to a biomolecule having a smaller expression amount (or expected to have a smaller expression amount). Fig. 17 illustrates a conceptual diagram related to such assignment.

The processing unit 101 generates a combination of a phosphor and a biomolecule for each of the biomolecules by the assignment processing described above. In this manner, the processing unit 101 generates a combination list of the phosphors for the biomolecules.

An example of a generation result of the combination list is illustrated in d of Fig. 15A. The processing unit 101 may output the generation result of the combination list, and in this case, the processing unit 101 may display not only the combinations of the biomolecules and the phosphors but also fluorescence spectra of the respective fluorochromes, for example, as in d of Fig. 15A. Since the fluorescence spectra are displayed, the user can visually confirm whether or not there is an overlap between the spectra.

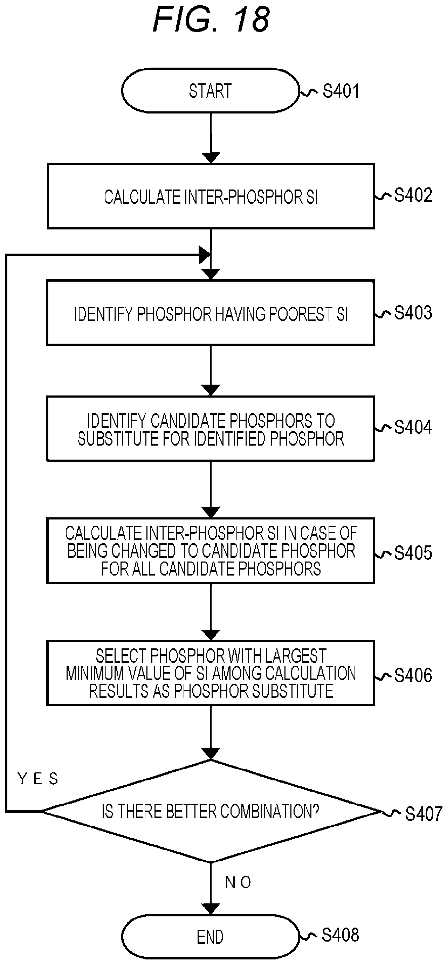

In step S308, the processing unit 101 performs a separability evaluation of the phosphor combination generated in step S307. The separability evaluation will be separately described below with reference to Fig. 18.

Note that the processing unit 101 may advance the processing to step S309 without executing step S308. In a case where step S308 is not executed, the combination list generated in step S307 is used in step S309.

In step S309, the processing unit 101 can cause, for example, the output unit 104 to output the combination list generated in step S308. For example, the combination list can be displayed on the display device.

Note that, in a case where step S308 is not executed, the processing unit 101 can cause the output unit 104 to output the combination list generated in step S307.

In step S309, the processing unit 101 can further display reagent information corresponding to a combination of an antibody (or antigen) and a fluorochrome on the output unit 104. The reagent information may be acquired from the reagent database described above. The reagent information may include, for example, a name, a product number, a sales company name, a price, and the like of a reagent. In order to display the reagent information, for example, the processing unit 101 may acquire the reagent information from a database existing outside the information processing device 100 or from a database stored inside the information processing device 100 (for example, the storage unit 102).

Furthermore, the information processing device 100 may output the recommendation information on the basis of information of the price and/or the sales company in the reagent database. Therefore, it is possible to recommend reagent information with a lower price. Furthermore, the number of companies that need to be accessed by the user can be reduced, for example, by recommending reagents from a smaller number of companies.

For example, in step S309, the information processing device 100 may transmit the combination list to, for example, the server 120 (or the server 120-1). In response to reception of the combination list, the server 120 (or the server 120-1) identifies correspondence information corresponding to the combination of the antibody and the fluorochrome included in the combination list, and then, identifies a reagent included in the correspondence information. Note that the correspondence information includes, for example, a name of a reagent and the like as described above, and thus, the reagent can be identified by identifying the correspondence information. Then, the server 120 (or the server 120-1) transmits reagent information regarding the identified reagent to the information processing device 100. The reagent information can be treated by the information processing device 100 as recommendation information of the reagent. The information processing device 100 can cause the output unit 104 to display the received reagent information as described above. Therefore, the output unit 104 can display the recommendation information of the reagent.

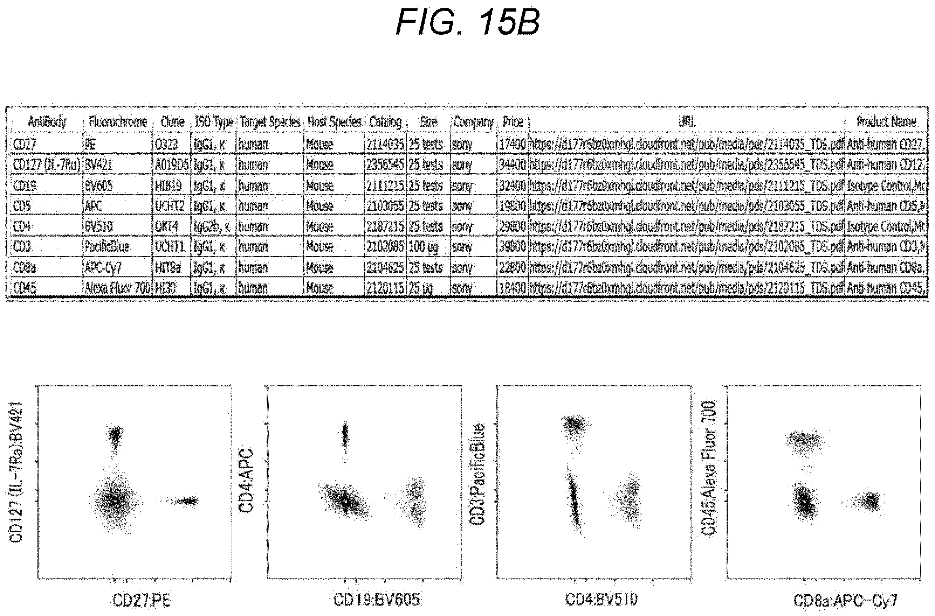

Fig. 15B illustrates an example of an output result. In this example, simulation results are also illustrated in addition to names of the antibodies (or antigens), names of fluorochromes, names, product numbers, manufacturer names, prices, and the like of the reagents.

Through the above processing, the combinations of the biomolecules and the phosphors can be optimized, and the optimized combination list can be presented to the user.

As described above, an information processing device included in the information processing system according to the present technology may include a processing unit that generates a combination list of phosphors for biomolecules on the basis of expression amount categories in which a plurality of biomolecules used for analysis of a sample is classified on the basis of expression amounts in the sample, brightness categories in which a plurality of phosphors that can be used for analysis of the sample is classified on the basis of brightness, and correlation information between the plurality of phosphors.

The processing unit may select the phosphor to be assigned to the biomolecule in the combination list from phosphors belonging to a brightness category associated with an expression amount category to which the biomolecule belongs.

The expression amount categories may be associated with the brightness categories such that an expression amount category in which a biomolecule illustrating a smaller expression amount is classified is associated with a brightness category in which a brighter phosphor is classified.

(3-2-4) Example of Separability Evaluation Processing

Hereinafter, the separability evaluation processing mentioned in (3-2-3) described above will be described with reference to Fig. 18.

In step S401 of Fig. 18, the processing unit 101 starts the separability evaluation processing.

In step S402, the processing unit 101 calculates a stain index between phosphors (stain-index is also referred to as "SI" in the present specification). The SI can be obtained using, for example, data obtained by generating simulation data using the combination list generated in step S307 and performing unmixing processing on the simulation data using a spectral reference.

Here, the simulation data may be, for example, a data group that is likely to have been measured by a device (for example, a flow cytometer) in which analysis using the reagents according to the combination list is performed. In a case where the device is a microparticle analyzer such as a flow cytometer, the simulation data may be a data group that is likely to be obtained in a case of actually measuring 100 to 1000 microparticles, for example. For example, conditions such as noise, staining variations, and the number of pieces of generated data of the device may be considered in order for generation of the data group.

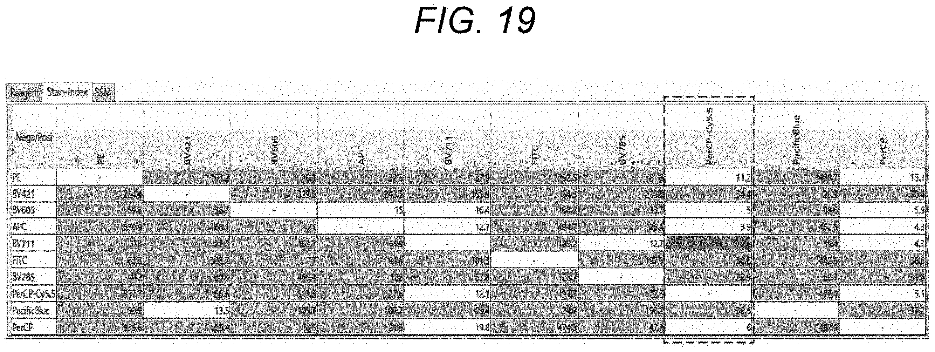

In step S402, the processing unit 101 can acquire data of inter-phosphor SIs as illustrated in Fig. 19, for example. The data includes all SIs between two different phosphors in a phosphor group constituting the combination list.

In step S403, the processing unit 101 identifies one or a plurality of phosphors having poor separation performance, particularly one phosphor having poor separation performance, on the basis of the calculated inter-phosphor SIs. For example, the processing unit 101 can identify a phosphor treated as positive out of two phosphors for which the smallest inter-phosphor SI has been calculated as the one phosphor having poor separation performance.

For example, with respect to the inter-phosphor SI data illustrated in Fig. 19, in step S403, the processing unit 101 identifies a phosphor "PerCP-Cy5.5" treated as positive (posi) out of two phosphors for which the smallest inter-phosphor SI "2.8" has been calculated as the one phosphor having poor separation performance.

In step S404, the processing unit 101 identifies a candidate phosphor that substitutes for the phosphor having poor separation performance identified in step S403. The candidate phosphor can be identified, for example, as follows. First, the processing unit 101 can refer to a brightness category to which the phosphor having poor separation performance belongs, and identify a phosphor that has not been adopted in the combination list among phosphors belonging to the brightness category as a candidate phosphor. In addition, the processing unit 101 may select a candidate phosphor from a brightness category whose brightness is the closest to that of the brightness category to which the phosphor having poor separation performance belongs. The processing unit 101 can identify a phosphor that has not been adopted in the combination list among phosphors belonging to the closest brightness category as the candidate phosphor.

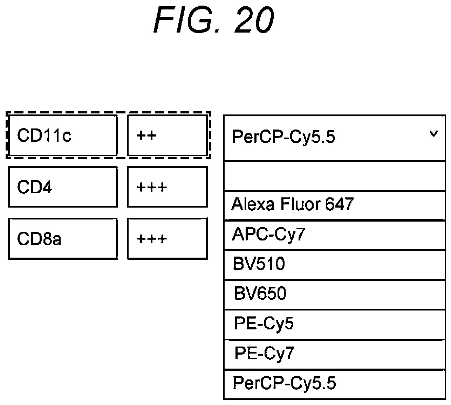

For example, in Fig. 20, the processing unit 101 identifies six phosphors including "Alexa Fluor 647" and the like as candidate phosphors to substitute for the phosphor "PerCP-Cy5.5" having poor separation performance. In this manner, a plurality of candidate phosphors may be identified, or only one candidate phosphor may be identified.

In step S405, the processing unit 101 calculates an inter-phosphor SI in a case where the phosphor having poor separation performance identified in step S404 is changed to the candidate phosphor. This calculation may be performed for all of the candidate phosphors.

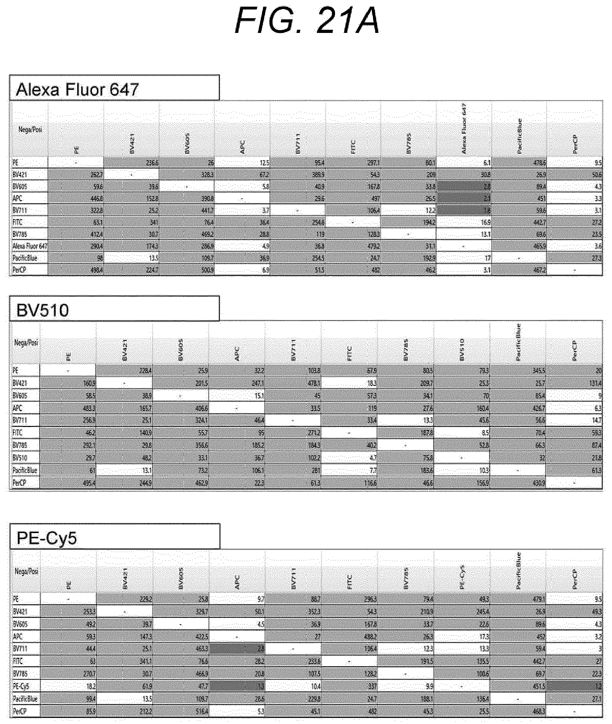

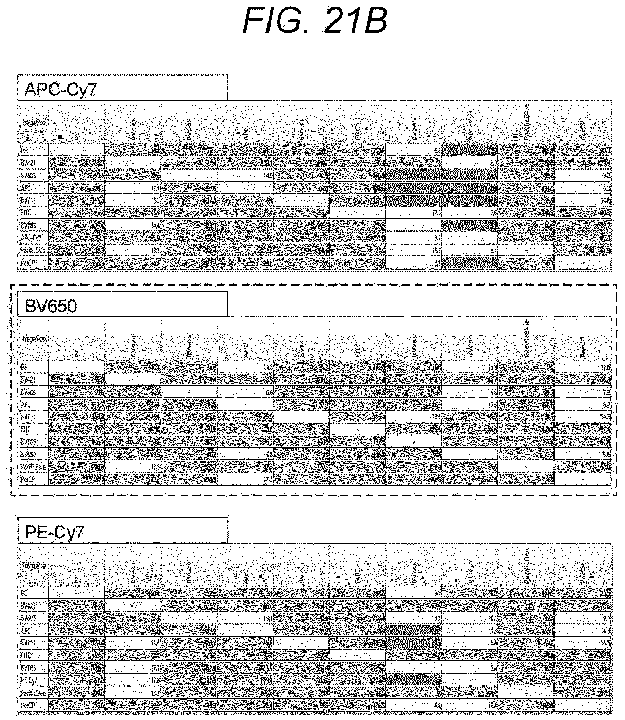

Examples of results of the calculation are illustrated in Figs. 21A and 21B. Figs. 21A and 21B illustrates an inter-phosphor SI in a case where the phosphor having poor separation performance is changed to the candidate phosphor for each of the six phosphors mentioned with reference to Fig. 20.

In step S406, the processing unit 101 selects, as a phosphor substituting for the phosphor having poor separation performance, a candidate phosphor for which a calculation result with the largest minimum value of the inter-phosphor SI has been obtained among the calculation results in step S405.

For example, regarding the calculation results in Figs. 21A and 21B, a minimum value of an inter-phosphor SI related to "BV650" is the largest among minimum values of inter-phosphor SIs in the calculation results of the six candidate phosphors. Therefore, the processing unit 101 selects "BV650" as a phosphor substituting for "PerCP-Cy5.5".

In step S407, the processing unit 101 determines whether there is a phosphor combination better than the combination list in which the phosphor having poor separation performance is substituted by the phosphor selected in step S406. For this determination, for example, step S403 to 406 may be repeated.

In a case where there is a combination with a larger minimum value of the inter-phosphor SI as a result of repeating step S403 to 406, the processing unit 101 determines that there is a better phosphor combination. In a case where the determination is made in this manner, the processing unit 101 returns the processing to step S403.

In a case where there is no combination with a larger minimum value of the inter-phosphor SI as a result of repeating step S403 to 406, the processing unit 101 determines that there is no better phosphor combination. In a case where it is determined that there is no better phosphor combination, the processing unit 101 identifies a phosphor combination in a stage immediately before repeating step S403 to 306 as the optimized combination list, and advances the processing to step S408.

In step S408, the processing unit 101 ends the separability evaluation processing and advances the processing to step S309.

Through the processing as described above, it is possible to present the combination list of biomolecules and phosphors that have been optimized in consideration of the separability.

As described above, the processing unit 101 can perform the separability evaluation regarding the generated combination list in a preferred embodiment of the present technology. For example, the processing unit 101 can generate simulation data regarding the generated combination list and perform the separability evaluation regarding the combination list using the simulation data. Since the evaluation of the separability is performed, the accuracy of optimization can be enhanced. For example, it is possible to confirm whether the combination list generated in step S307 exhibits desired separation performance by performing the evaluation of the separability, or it is also possible to generate a combination list exhibiting better separation performance according to the confirmation result.

In this separability evaluation processing, for example, the processing unit 101 can further generate a modified combination list in which at least one phosphor of a set of phosphors included in the combination list has been changed to another phosphor according to a result of the separability evaluation, and further perform separability evaluation regarding the modified combination list. Since the modified combination list is generated, and then, the separability evaluation is performed, a combination list that exhibits better separation performance can be generated.

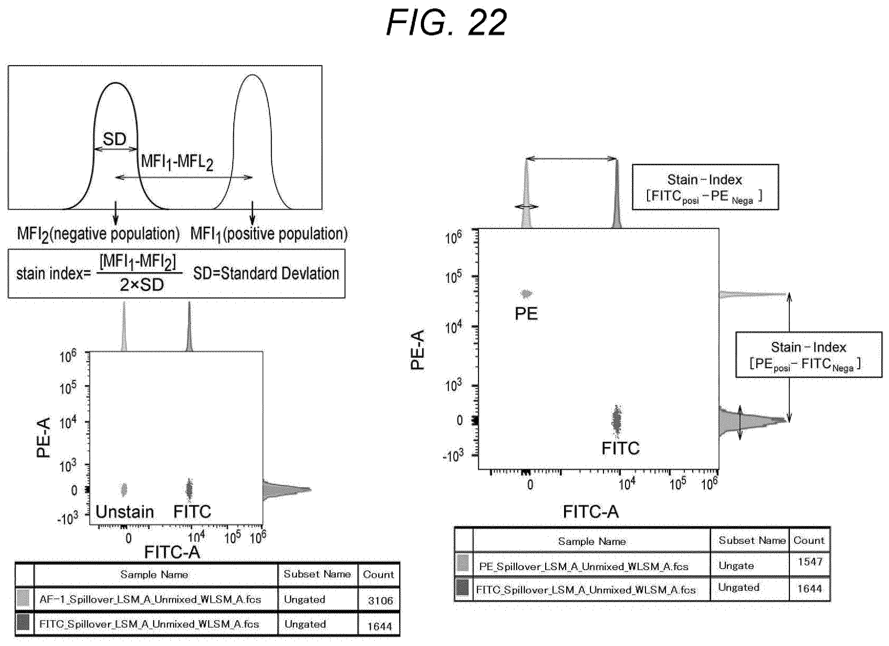

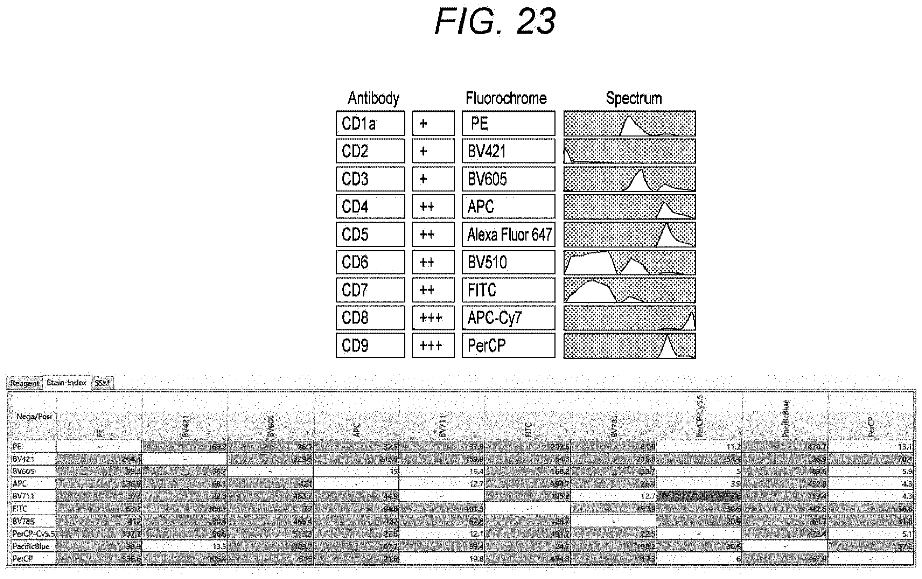

The separability evaluation may be, for example, evaluation using a Stain-Index, and more preferably evaluation using a stain index between phosphors. In the technical field, the stain index is an index indicating the performance of a phosphor (fluorochrome) itself, and is defined by the amount of fluorescence of stained particles and the amount of fluorescence of unstained particles and a standard deviation of unstained particle data, for example, as illustrated in the left of Fig. 22. The unstained particle data replaced with particles stained with another phosphor is the stain index between the phosphors and is illustrated, for example, in the right of Fig. 19. It is possible to evaluate separation performance between phosphors in consideration of the amount of leakage due to an overlap of fluorescence spectra, the amount of fluorescence, and noise on the basis of the stain index between the phosphors. Fig. 23 illustrates an example of a result of calculating a stain index between phosphors for all combinations of two phosphors in a phosphor group constituting a generated combination list.

Note that the processing unit 101 of the present technology can cause the output unit 104 to output a calculation result for all the combinations of two phosphors in the phosphor group constituting the combination list generated by the processing unit. Therefore, the user can easily evaluate the separation performance.

For example, in a table of an inter-fluorochrome stain index as illustrated in Fig. 23, the smaller the number of regions having a smaller numerical value of the inter-fluorochrome stain index, the better the separation performance. In the present technology, first, a combination list may be generated on the basis of the expression amount categories, the brightness categories, and the correlation information, and then, separability evaluation using an index such as the stain index may be performed next. For example, a phosphor combination having poor separation performance can be known by the separability evaluation regarding the generated combination list, and a panel having better separation performance can be designed by changing the phosphor combination.

Furthermore, to perform panel design by performing the combination list generation and the separability evaluation (and panel correction as necessary) based on the categories and the like described above can reduce calculation time much more than to perform panel design by performing the separability evaluation for every combination.

(3-2-5) Generation of Database

Hereinafter, generation of a database used in the present technology will be described.

(3-2-5-1) Generation of Fluorochrome Database

As described in (3-2-1) described above, the fluorochrome DB 132 includes pieces of fluorescence signal data of fluorochromes, and each piece of the fluorescence signal data may include fluorescence spectrum data and brightness data of the fluorochrome.

The fluorescence spectrum data and the brightness data are obtained by measuring fluorescence of each of a plurality of fluorochromes constituting the fluorochrome DB 132 by, for example, a flow cytometer.

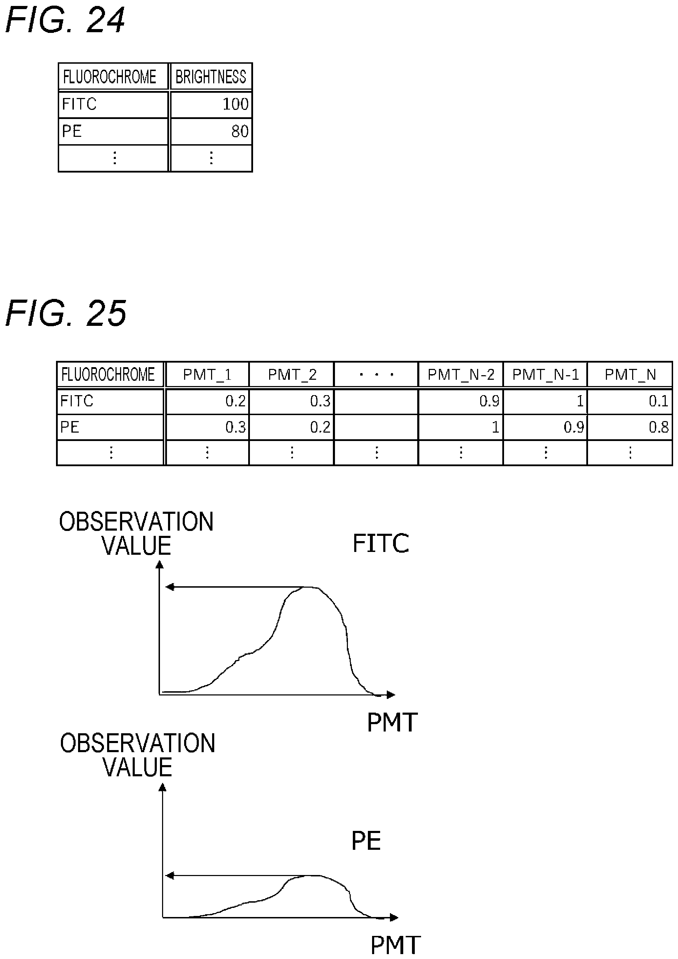

The brightness data is preferably a normalized value, but may be an actually measured value. With respect to the normalized value, for example, brightness data of a certain fluorochrome may be expressed as a fluorescence intensity at a peak of a fluorescence spectrum of the certain fluorochrome with respect to a fluorescence intensity at a peak of a fluorescence spectrum of a fluorochrome serving as a reference. For example, a peak fluorescence intensity of a fluorescence spectrum of FITC serving as a reference is acquired under predetermined measurement conditions using the flow cytometer. Next, for example, for PE, a peak fluorescence intensity of a fluorescence spectrum measured under the same measurement conditions is acquired. Then, the peak fluorescence intensity for FITC is set to 100, and the peak fluorescence intensity for PE is expressed as a relative value with respect to the peak fluorescence intensity for FITC, and is expressed as, for example, 80 or the like. In this manner, the brightness data represented as a relative value is obtained, for example, as illustrated in Fig. 24.

Note that the measurement by the flow cytometer may be performed using, for example, beads labeled with fluorochromes.

The fluorescence spectrum data is generated from values measured by photodetectors (for example, photoelectron multiplier tubes (PMTs) or the like) when fluorescence generated from fluorochromes are measured by the flow cytometer. Note that the fluorochrome DB 132 may have the measured values itself. In order to obtain the fluorescence spectrum data, measured values of the respective PMTs may be represented as relative values with respect to a measured value of a PMT in which the peak has been recorded. From these relative values, a shape of the fluorescence spectrum is obtained. Therefore, the fluorescence spectrum data is obtained, for example, as illustrated in Fig. 25.

Furthermore, measurement conditions for acquiring the above-described brightness data and fluorescence spectrum data of the fluorochrome may also be associated with the fluorescence signal data. The measurement conditions may be the measuring instrument information described above. Furthermore, the measurement conditions can include set values of a measuring instrument in measurement. The set values can include, for example, a gain value of a photodetector (for example, each PMT), a flow rate, and the like.

(3-2-5-2) Generation of Reagent Database

As described in (3-2-1) described above, the reagent DB 131 includes correspondence information, and the correspondence information can include a name of a reagent, a name of a biomolecule constituting the reagent, and a name of a fluorochrome constituting the reagent. Data included in the correspondence information can be collected from, for example, a reagent list provided by a reagent manufacturer. The collection may be performed, for example, by a person or may be performed using a curation program. Therefore, the reagent DB is constructed. Furthermore, the constructed reagent DB may be updated as necessary or periodically. For example, the server 120 may periodically execute the curation program to collect data and automatically update only difference information.

(3-2-5-3) Reagent Registration Processing Using Integration Processing Table

The server 120 can include a registration processing unit that executes reagent registration processing. The above registration processing unit may be configured to execute integration processing of notational variations of measurement target information, a reagent, or a fluorochrome. The reagent DB and/or the fluorochrome DB can have an integration processing data table that is referred to for executing the integration processing of notational variations.

The registration processing unit can register the measurement target information, the reagent, or the fluorochrome, determined to be equivalent although having notational variations, in an existing record in the reagent database or the fluorochrome database. Furthermore, the registration processing unit can create a new record for measurement target information, a reagent, or a fluorochrome that is not determined to be equivalent and register the new record in the reagent database or the fluorochrome database.

The integration processing may be executed, for example, regarding a biomolecule that is the measurement target information. For example, the correspondence information constituting the reagent DB includes a biomolecule name. One biomolecule sometimes has a plurality of different names, and names different for each reagent manufacturer are sometimes adopted. Furthermore, there may also be notational variations of the biomolecule name. Therefore, the biomolecule name integration processing table in (3-2-1) described above may be used in order to generate or update the reagent DB. That is, the server 120 can include a registration processing unit that executes reagent registration processing in the reagent database using the biomolecule name integration processing table in one embodiment of the present technology.

The integration processing may be executed, for example, regarding a fluorochrome. Furthermore, the correspondence information constituting the reagent DB includes a fluorochrome name. Furthermore, the fluorochrome DB includes a fluorochrome name. Regarding the fluorochrome, one fluorochrome sometimes has a plurality of different names, names different for each reagent manufacturer are sometimes adopted. Furthermore, there may also be notational variations of the fluorochrome name. Therefore, the fluorochrome name integration processing table in (3-2-1) described above may be used in order to generate or update the reagent DB. That is, the server 120 can include a registration processing unit that executes reagent registration processing on the reagent database or the fluorochrome database using the fluorochrome name integration processing table in one embodiment of the present technology.

Furthermore, the integration processing may be executed, for example, regarding a reagent. In a case where the reagent is a biomolecule (for example, an antibody) labeled with a fluorochrome, the registration processing unit can perform the reagent registration processing using the two integration processing tables described above.

In this manner, the registration processing unit may execute the reagent registration processing using both the biomolecule name integration processing table and the fluorochrome name integration processing table, or may execute the reagent registration processing using any one of these tables in the present technology.

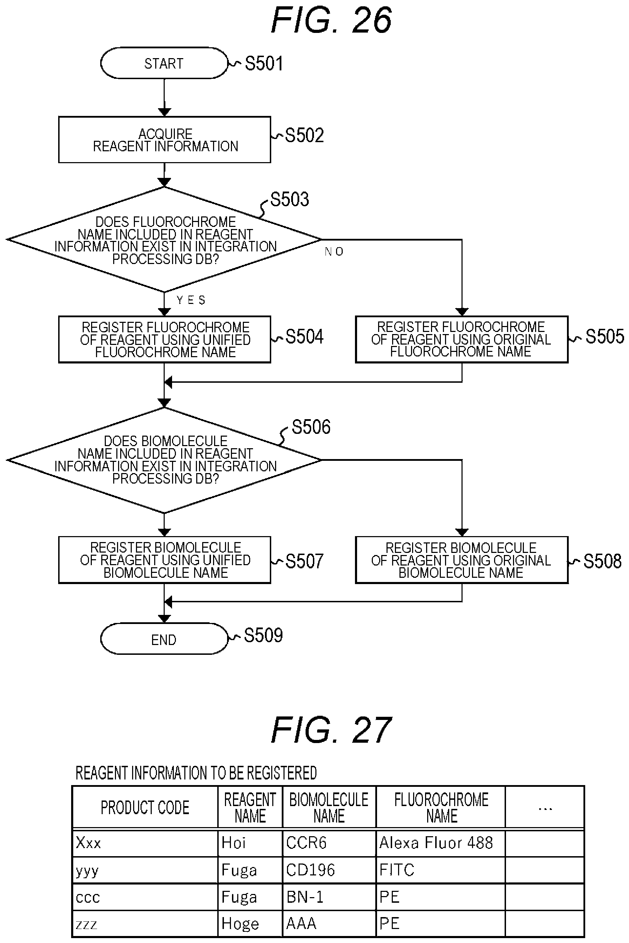

Hereinafter, an example of the reagent registration processing using these integration processing tables will be described with reference to Fig. 26. Fig. 26 is an example of a flowchart of the processing.

Furthermore, Fig. 27 illustrates four examples xxx, yyy, ccc, and zzz of reagent information to be registered. Hereinafter, an example of a process of registering these four pieces of reagent information with reference to the integration processing tables of Figs. 8 and 11 will also be described.

In step S501, the server 120 starts the reagent registration processing.

In step S502, the server 120 acquires reagent information of one reagent or each of the plurality of reagents. For example, the server 120 may acquire the reagent information by receiving the reagent information transmitted from the information processing device 100, or may acquire the reagent information by executing a curation program. The registration processing unit 133 temporarily adds the acquired reagent information to the reagent database as new correspondence information.

In step S503, the registration processing unit 133 determines whether a fluorochrome name included in the acquired reagent information exists in the fluorochrome name integration processing table. The determination may be performed, for example, by executing search processing using the fluorochrome name as a keyword with respect to the database.

In a case where the fluorochrome name exists in the fluorochrome name integration processing table, the registration processing unit 133 advances the processing to step S504.

In a case where the fluorochrome name does not exist in the fluorochrome name integration processing table, the registration processing unit 133 advances the processing to step S505.

For xxx among the four examples, "Alexa Fluor 488" exists in the fluorochrome name integration processing table, and thus, the registration processing unit 133 advances the processing to step S504. For yyy, ccc, and zzz, "FITC", "PE", and "PE", respectively, exist in the fluorochrome name integration processing table, and thus, the processing is advanced to step S504.

In step S504, the registration processing unit 133 registers a unified name in data including the fluorochrome name in the fluorochrome name integration processing table in the reagent database as the name of the fluorochrome included in the reagent information. In this manner, the registration processing unit 133 can register the fluorochrome determined to be equivalent although having some notational variations in the existing record in the reagent database.

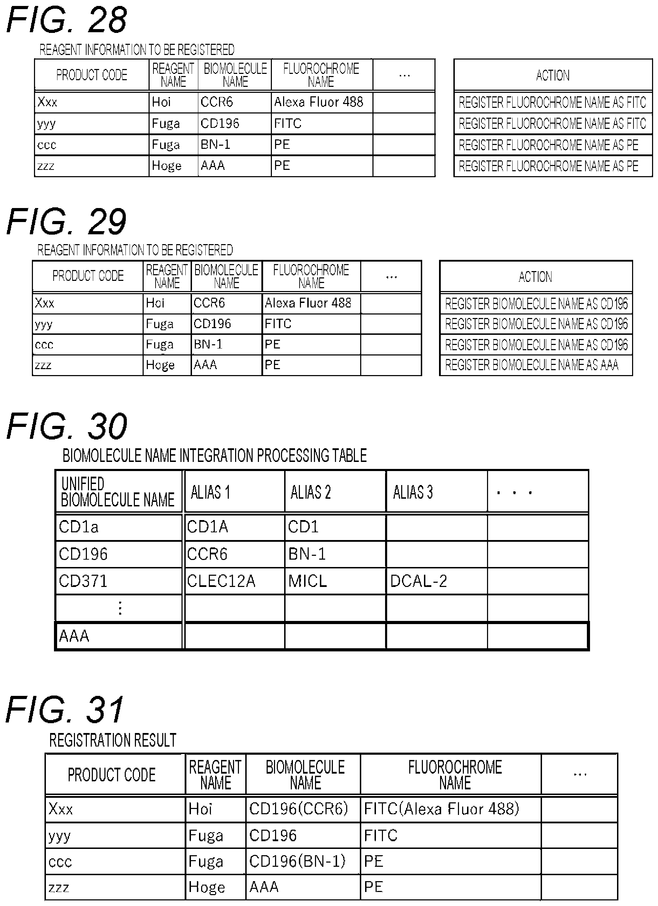

As illustrated in Fig. 28, for xxx among the four examples, "FITC" as the unified name of "Alexa Fluor 488" exists in the fluorochrome name integration processing table, and thus, the registration processing unit 133 registers "FITC" as the name of the fluorochrome. For yyy, ccc, and zzz, the fluorochrome name in the reagent information is registered as the unified name in the fluorochrome name integration processing table, and thus, the name is registered as the name of the fluorochrome.

In step S505, the registration processing unit 133 registers the fluorochrome name included in the acquired reagent information in the reagent database as the name of the fluorochrome included in the reagent information. Like k, the registration processing unit 133 can create a new record and register the fluorochrome name in the record.

Furthermore, the registration processing unit 133 can additionally register the fluorochrome name included in the acquired reagent information in the fluorochrome name integration processing table as new fluorochrome data, particularly as the unified name of the fluorochrome. Since the additional registration is performed in this manner, data included in the table can be extended.

In step S506, the registration processing unit 133 determines whether a biomolecule name included in the acquired reagent information exists in the biomolecule name integration processing table. The determination may be performed, for example, by executing search processing using the biomolecule name as a keyword with respect to the database.

In a case where the biomolecule name exists in the biomolecule name integration processing table, the registration processing unit 133 advances the processing to step S507.

In a case where the biomolecule name does not exist in the biomolecule name integration processing table, the registration processing unit 133 advances the processing to step S508.

For xxx, yyy, and ccc among the above four examples, "CCR6", "CD196", and "BN-1" exist in the biomolecule name integration processing table, the registration processing unit 133 advances the processing to step S507. For zzz, "AAA" does not exist in the fluorochrome name integration processing table, the processing is advanced to step S508.

In step S507, the registration processing unit 133 registers a unified name in data including the biomolecule name in the biomolecule name integration processing table in the reagent database as the name of the biomolecule included in the reagent information. In this manner, the registration processing unit 133 can register the biomolecule determined to be equivalent although having some notational variations in the existing record in the reagent database.

As illustrated in Fig. 29, for xxx among the four examples, the registration processing unit 133 registers "CD196", which is the unified name of "CCR6", in the biomolecule name integration processing table as the biomolecule name included in xxx. For yyy, since "CD196" is the unified name, the registration processing unit 133 registers this as the biomolecule name included in yyy. For the ccc, the registration processing unit 133 registers "CD196" which is the unified name of "BN-1" as the biomolecule name included in the ccc.

In step S508, the registration processing unit 133 registers the biomolecule name included in the acquired reagent information in the reagent database as the name of the biomolecule included in the reagent information. In this manner, the registration processing unit 133 can create a new record for the measurement target information (for example, biomolecule) that is not determined to be equivalent and register the record in the reagent database.

Furthermore, the registration processing unit 133 can additionally register the biomolecule name included in the acquired reagent information in the biomolecule name integration processing table as new biomolecule data.

As illustrated in Fig. 29, for zzz among the four examples described above, the registration processing unit 133 registers "AAA" as the name of the biomolecule included in the reagent zzz.

Furthermore, as illustrated in Fig. 30, the registration processing unit 133 also registers "AAA" in the biomolecule name integration processing table.

In step S509, the server 120 ends the reagent registration processing.

Through the above processing, the four reagents are registered in the reagent DB as illustrated in Fig. 31. That is, pieces of the reagent information regarding these four reagents are registered in the reagent DB as new four pieces of correspondence information.

Furthermore, regarding the fluorochrome and biomolecules for which the unified names have been adopted instead of the original names, the original names may be displayed in parentheses as illustrated in Fig. 31. Therefore, it becomes easy to understand the relationship with the original name. Note that the parentheses are not necessarily displayed.

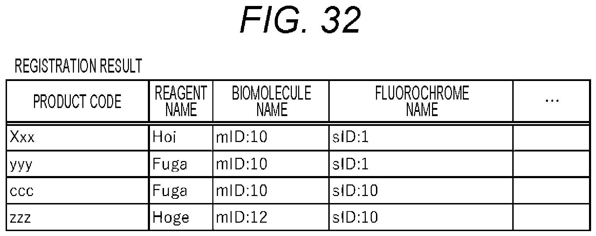

Note that the biomolecule name and the fluorochrome name included in the reagent DB may be abbreviations, numbers, or the like, instead of directly using names in the present technology. In a case where ID numbers are given to the respective unified biomolecule names and the respective unified fluorochrome names in the biomolecule name integration processing table and the fluorochrome name integration processing table, the ID numbers may be registered in the reagent database instead of the unified names, for example, as illustrated in Fig. 32. In Fig. 32, "mID: 10" and "mID: 12" correspond to "CD196" and "AAA" in Fig. 31, respectively. Furthermore, "sID: 1" and "sID: 10" in Fig. 32 correspond to "FITC" and "PE" in Fig. 31, respectively.

Note that, in the above processing flow, the reagent information is registered as the new correspondence information in the reagent database in step S502, and then, the biomolecule name and the fluorochrome name in the correspondence information are changed to the unified names in steps S504 and S507.

In the present technology, steps S504 and S507 may be executed to change the biomolecule name and the fluorochrome name in the reagent information to the unified names, and thereafter, the reagent information after the change to the unified names may be registered in the reagent database as the correspondence information.

(3-3) Example of Processing Performed by Information Processing System (Unmixing Processing)

(3-3-1) Example of Information Processing For Acquisition of Fluorescence Signal Data

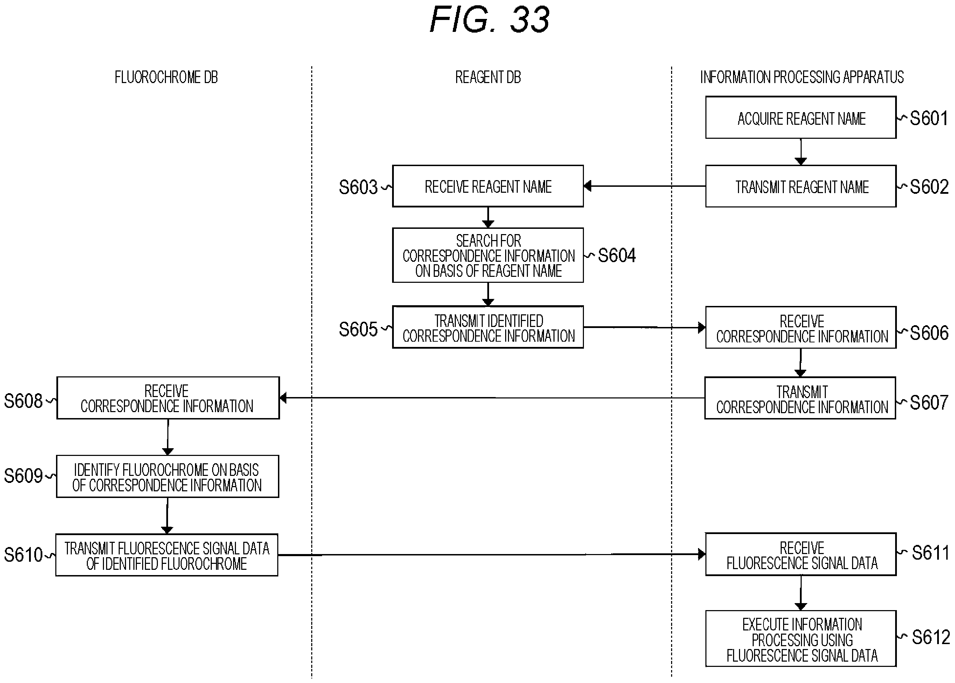

Fluorescence signal data acquisition processing according to the present technology may be executed to execute unmixing processing, and more specifically, may be executed to acquire spectral reference data (hereinafter, also referred to as SR data) used in the unmixing processing. Hereinafter, a processing example of such fluorescence signal data acquisition will be described with reference to Fig. 33. Fig. 33 is a flowchart of the processing.

In step S601 of Fig. 33, the information processing device 100 acquires or generates measurement target information. The measurement target information includes information regarding a reagent. The information regarding the reagent can include a name, an abbreviation, or a number of the reagent. According to one embodiment of the present technology, the measurement target information includes a name, an abbreviation, or a number of at least one reagent, and can include, for example, names, abbreviations, or numbers of 2 or more, 5 or more, or 10 or more reagents. A lower limit value of the number of reagents may be, for example, 1, 2, 5, or 10. An upper limit value of reagents may be, for example, 300, 200, 150, 100, or 50. A numerical range of the number of reagents may be a combination of values selected from the examples of the lower limit value and the examples of the upper limit value, and may be, for example, 2 to 300, 5 to 200, 5 to 150, or 5 to 100. The reagent may be, for example, a fluorochrome-labeled antibody.

The measurement target information can further include measuring instrument information. The measuring instrument information is information regarding an instrument that executes measurement using a measurement target. For example, the measuring instrument information may include information regarding a flow cytometer that performs flow cytometry using a measurement target. The measuring instrument information includes, for example, at least one of a model name of the measuring instrument, a laser wavelength, or a detection wavelength range of a detector. The measuring instrument information may further include a product number, a manufacturer name, a manufacturing number, a name of a component attached to the measuring instrument, a software name used by the measuring instrument, and the like.

In step S602, the information processing device 100 transmits the measurement target information to the server 120.

In step S603, the server 120 receives the measurement target information.

In step S604, the server 120 executes search processing on the reagent DB 121 in response to the reception of the measurement target information. For example, the server 120 searches the reagent DB 121 using, for example, a name, an abbreviation, a product number, or the like of a previous fluorescently labeled antibody as a keyword, and identifies correspondence information including the name or the like.

In the present specification, the correspondence information may mean information regarding a correspondence between a reagent and a fluorochrome. For example, one piece of correspondence information can include a name or an abbreviation of a biomolecule captured by one reagent and a name or an abbreviation of a fluorochrome included in the reagent. Therefore, a fluorochrome constituting a fluorescently labeled antibody can be identified on the basis of an input name of the fluorescently labeled antibody, and the fluorochrome DB can be searched on the basis of the identified fluorochrome.

One piece of correspondence information may correspond to one reagent, that is, one piece of the correspondence information can include information regarding an antibody constituting one fluorochrome-labeled antibody and information regarding a fluorochrome. Therefore, a fluorochrome constituting the fluorescently labeled antibody can be identified on the basis of, for example, a name of a fluorochrome-labeled antibody or the like.

Regarding the reagent DB 131, the description as given in (3-2) described above also applies to the present embodiment.

In step S604, the server 120 (particularly, the processing unit 121) searches the reagent DB 131 using the name or the like of the fluorochrome-labeled antibody received in step S503. Then, the processing unit 121 identifies correspondence information including the name or the like of the fluorochrome-labeled antibody. Here, the processing unit 121 may identify one piece of correspondence information or may identify two or more pieces of correspondence information.

In step S605, the server 120 transmits the correspondence information identified in step S604 to the information processing device 100. In step S605, the correspondence information transmitted by the server 120 can include, for example, a name or an abbreviation of a fluorochrome included in the fluorochrome-labeled antibody. The correspondence information transmitted by the server 120 may directly use one piece of correspondence information constituting the correspondence information data table.

In step S606, the information processing device 100 receives the correspondence information from the server 120.

In step S607, the information processing device 100 transmits the correspondence information received in step S606 to the server 120. The correspondence information to be transmitted can include information (for example, the name or abbreviation of the fluorochrome) regarding the fluorochrome included in the fluorochrome-labeled antibody. Furthermore, the correspondence information may further include a name or an abbreviation of the fluorochrome-labeled antibody.

In a preferred embodiment, in step S607, the information processing device 100 transmits measuring instrument information to the server 120 in addition to the correspondence information. The measuring instrument information is information regarding a measuring instrument that performs measurement using the fluorochrome-labeled antibody, and can include, for example, at least one of a model name of the measuring instrument, a laser wavelength, or a detection wavelength range of a detector. Therefore, among pieces of fluorescence signal data included in the fluorochrome DB 132, fluorescence signal data of a fluorochrome associated with the measuring instrument can be identified.

In step S608, the server 120 receives the correspondence information.

In step S609, the server 120 identifies a fluorochrome corresponding to the correspondence information from among fluorochromes included in the fluorochrome DB 132 on the basis of the received correspondence information. For example, the server 120 identifies fluorescence signal data corresponding to the fluorochrome name included in the correspondence information.

The description given in (3-2) described above applies to the fluorochrome DB 132. Preferably, each piece of the fluorescence signal data includes a fluorochrome name and fluorescence spectrum data. Therefore, the unmixing processing using the fluorescence spectrum data as a spectral reference becomes possible.

In a preferred embodiment of the present technology, fluorescence signal data may be associated with measuring instrument information. Since measurement data regarding fluorescence generated from a fluorochrome can vary depending on a measuring instrument, the association enables unmixing processing in consideration of the measuring instrument.

The measuring instrument information is information regarding a measuring instrument that performs measurement using a reagent, and may include, for example, at least one of a model name of the measuring instrument, a laser wavelength, or a detection wavelength range of a detector. Preferably, a type of the measuring instrument information associated with the fluorescence signal data is the same as a type of the measuring instrument information transmitted by the information processing device 100 in step S507. Therefore, measuring instrument information corresponding to the latter measuring instrument information can be identified in the fluorochrome DB 132.

In step S610, the server 120 transmits fluorescence signal data of the fluorochrome identified in step S609 to the information processing device 100. Preferably, the transmitted fluorescence signal data includes fluorescence spectrum data. Therefore, the unmixing processing using the fluorescence spectrum data becomes possible.

In step S611, the information processing device 100 receives the fluorescence signal data transmitted from the server 120.

In step S612, the processing unit 101 executes information processing using the fluorescence signal data. The information processing can include unmixing processing. The processing unit 101 can perform the unmixing processing using the fluorescence signal data acquired in step S610 as spectral reference data.

The spectral reference data used in the unmixing processing includes spectral data of fluorescence generated when a phosphor labeling a particle is irradiated with predetermined excitation light.

The information processing device 100 can acquire the measurement spectrum data to be unmixed from the analyzer 110 configured as, for example, a flow cytometer. Note that an acquisition form of the measurement spectrum data may be changed according to an analyzer. The measurement spectrum data can be acquired, for example, by irradiating a particle labeled with a reagent with excitation light. Then, as the information processing, the information processing device 100 can perform the unmixing processing (fluorescence separation processing) on the measurement spectrum data using the fluorescence spectrum data of the fluorochrome.

The processing unit 101 can perform the unmixing processing using, for example, a least square method (LSM), more preferably a weighted least square method (WLSM). The unmixing processing using the least square method may be performed using, for example, a fluorescence intensity correction method described in Japanese Patent No. 5985140. The fluorescence intensity correction method can be performed using, for example, the following Formula (2) of WLSM.
[Formula 2]

$$\begin{bmatrix} x_1 \\ \vdots \\ x_n \end{bmatrix} = ([S^T][L][S])^{-1}[S^T][L] \begin{bmatrix} y_1 \\ \vdots \\ y_m \end{bmatrix} \quad \cdots (2)$$

$$L = \begin{bmatrix} \lambda_1 & 0 & 0 \\ 0 & \ddots & 0 \\ 0 & 0 & \lambda_m \end{bmatrix}, \quad \lambda_i = \frac{1}{max(y_i, \ 0) + offset},$$

In Formula (2) described above, xn represents a fluorescence intensity of an n-th fluorochrome, [ST] represents a transposed matrix of a spectral reference, and [L] represents a weight matrix, [S] represents a matrix of a spectral reference, yi represents a measured value at an i-th photodetector, λi represents a weight at the i-th photodetector, max(yi, 0) represents a large value obtained by comparing a detection value of the i-th detector with zero, and offset' represents a value determined on the basis of a detection value of each detector.

There is a case where a fluorescence wavelength distribution of a phosphor (for example, a fluorochrome) is wide. Therefore, for example, a PMT used to detect fluorescence generated from a certain phosphor can also detect fluorescence generated from another phosphor. That is, optical data acquired by each PMT can be data in which pieces of fluorescence data from a plurality of phosphors are superimposed. Therefore, it is necessary to perform correction for separating the optical data into pieces of fluorescence data from each of the phosphors. The unmixing processing is a method for the correction, and the data in which pieces of the fluorescence data from the plurality of phosphors are superimposed is separated into the fluorescence data from each of the phosphors by the unmixing processing, so that the fluorescence data from each of the phosphors is obtained.

In step S612, the processing unit 101 generates output data using the fluorescence data after the unmixing processing. The output data may be, for example, but not limited to, a two-dimensional plot regarding two desired fluorophores out of a plurality of phosphors used to label a population of particles that have been subject to flow cytometry. A vertical axis of the two-dimensional plot may be fluorescence data (particularly, fluorescence intensity) of fluorescence corresponding to one phosphor out of the two phosphors, and a horizontal axis may be fluorescence data (particularly, fluorescence intensity) of fluorescence corresponding to the other phosphor. The two-dimensional plot may be, for example, a density plot (dot plot), a contour plot, or a plot of both the density and the contour. A setting and developing operation of a gate for generating the two-dimensional plot may be appropriately performed by the user according to the purpose of particle analysis.

(3-3-2) Another Example of Information Processing For Acquisition of Fluorescence Signal Data

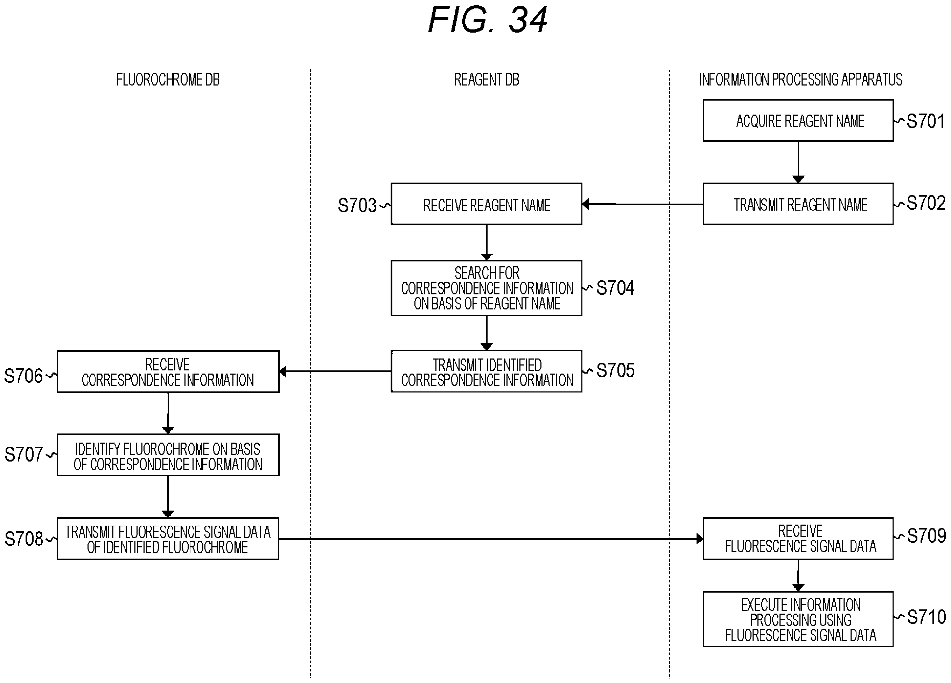

Another example of the information processing performed by the information processing system of the present technology will be described with reference to Fig. 34. Fig. 34 is a flowchart of the information processing.

In this flow example, the reagent DB 131 and the fluorochrome DB 132 can be stored in two servers, respectively. A configuration example of the information processing system of the present technology including two servers is the same as that described above with reference to Fig. 11.

Steps S701 to S704 in Fig. 34 are similar to steps S601 to S604 in (3-3-1) described above with reference to Fig. 33 except that the server 120-1 is used instead of the server 120, and the description thereof applies.

In step S705, the server 120-1 transmits the correspondence information identified in step S704 to the server 120-2. In step S705, the correspondence information transmitted by the server 120-1 can include, for example, a name or an abbreviation of a fluorochrome-labeled antibody. The correspondence information transmitted by the server 120-1 may directly use one piece of correspondence information constituting the correspondence information data table.

In step S706, in the server 120-2, the information processing device 100 receives the correspondence information from the server 120-1.

Steps S707 to S710 are similar to steps S609 to S612 in (3-3-1) described above except that the server 120-1 is used instead of the server 120, and the description thereof applies to steps S707 to S710.

2. Second Embodiment (Information Processing Method)

The present technology also provides an information processing method using a fluorochrome database and a reagent database. The fluorochrome database may hold fluorescence signal data of a fluorochrome associated with measuring instrument information. The reagent database may hold correspondence information regarding a correspondence between a reagent and a fluorochrome. These databases are the same as those described above in "1. First Embodiment (Information Processing System)".

The information processing method can include a fluorescence signal data acquisition step of acquiring fluorescence signal data of a fluorochrome corresponding to a reagent from the fluorochrome database using correspondence information regarding the reagent in the reagent database identified on the basis of input measurement target information. The fluorescence signal data acquisition step may be executed, for example, as described in "1. First Embodiment (Information Processing System)" described above, and may be executed, for example, as described in (3-2-1), (3-2-2), (3-3-1), or (3-3-2).

The information processing method can include an information processing step of performing information processing using the fluorescence signal data of the fluorochrome. The information processing step may be, for example, panel design information processing or unmixing processing. The information processing step may be executed, for example, as described in "1. First Embodiment (Information Processing System)" described above, and may be executed, for example, as described in (3-2-3), (3-2-4), or (3-3-1).

3. Other Embodiments

The present technology also provides a fluorochrome database that holds fluorescence signal data of a fluorochrome associated with measuring instrument information. Furthermore, the present technology also provides a reagent database that holds correspondence information regarding a correspondence between a reagent and a fluorochrome. Furthermore, the present technology also provides a combination of the fluorochrome database and the reagent database. These databases may be the same as those described above in "1. First Embodiment (Information Processing System)". The use of these databases in the information processing method according to the present technology or the use in combination with the information processing device according to the present technology enables, for example, efficient acquisition of the fluorescence signal data.

Furthermore, the present technology also provides an information processing device that acquires fluorescence signal data of a fluorochrome corresponding to a reagent from the fluorochrome database using correspondence information regarding the reagent in the reagent database identified on the basis of input measurement target information, and performs information processing using the fluorescence signal data of the fluorochrome. The information processing device may be the same as that described above in "1. First Embodiment (Information Processing System)".

Furthermore, the present technology also provides a program for causing an information processing device or an information processing system to execute the information processing method. The information processing method is the same as that described in 2. described above, and the description also applies to the present embodiment. The program according to the present technology may be recorded in, for example, the recording medium in (3-1) described above, or may be stored in the storage unit included in the information processing device or server described above.

Note that the present technology can also have the following configurations.

[1] An information processing system including:

a fluorochrome database that holds fluorescence signal data of a fluorochrome associated with measuring instrument information;
a reagent database that holds correspondence information regarding a correspondence between a reagent and the fluorochrome; and
an information processing device that acquires the fluorescence signal data of the fluorochrome corresponding to the reagent from the fluorochrome database using the correspondence information regarding the reagent in the reagent database identified on the basis of input measurement target information and performs information processing using the fluorescence signal data of the fluorochrome.

[2] The information processing system according to [1], in which the fluorescence signal data includes fluorescence spectrum data.
[3] The information processing system according to [1] or [2], in which the measuring instrument information includes at least one of a model name of a measuring instrument, a laser light wavelength, or a detection wavelength range of a detector.
[4] The information processing system according to any one of [1] to [3], in which

the information processing device
receives the correspondence information from the reagent database, and then,
acquires the fluorescence signal data of the fluorochrome corresponding to the reagent from the fluorochrome database using the received correspondence information.

[5] The information processing system according to any one of [1] to [3], in which

the information processing device
acquires the fluorescence signal data of the fluorochrome corresponding to the reagent from the fluorochrome database without receiving the correspondence information from the reagent database.

[6] The information processing system according to any one of [1] to [5], in which

the measurement target information includes a name, an abbreviation, or a number of at least one biomolecule,
the correspondence information includes information indicating a correspondence between the biomolecule and the reagent, and
the information processing device outputs recommendation information of the reagent corresponding to the biomolecule by the information processing.

[7] The information processing system according to [6], in which

the information processing device
searches the reagent database on the basis of the biomolecule to identify the reagent corresponding to the biomolecule; and then,
acquires, from the fluorochrome database, the fluorescence signal data of the fluorochrome associated with the measuring instrument information among a plurality of the fluorochromes associated with the reagent.

[8] The information processing system according to [6] or [7], in which the recommendation information of the reagent includes information regarding the reagent associated with a combination of the biomolecule and a fluorochrome corresponding to the biomolecule acquired by the information processing.

[9] The information processing system according to any one of [6] to [8], further including

an output unit that displays a screen prompting an input of the measurement target information,
in which the output unit also displays the recommendation information of the reagent.

[10] The information processing system according to any one of [1] to [9], in which

the measurement target information includes a name, an abbreviation, or a number of at least one reagent,
the fluorescence signal data includes fluorescence spectrum data,
the information processing device acquires measurement spectrum data acquired by irradiating a particle, labeled with the reagent, with excitation light, and then,
the information processing device performs fluorescence separation processing on the measurement spectrum data using the fluorescence spectrum data of the fluorochrome as the information processing.

[11] The information processing system according to any one of [1] to [10], further including

a registration processing unit that executes reagent registration processing,
in which the registration processing unit is configured to execute integration processing of notational variations of the measurement target information, the reagent, or the fluorochrome.

[12] The information processing system according to [11], in which

the reagent database or the fluorochrome database includes an integration processing data table that is referred to for executing the integration processing of notational variations, and
the registration processing unit registers measurement target information, a reagent, or a fluorochrome determined to be equivalent although having notational variations, in an existing record in the reagent database or the fluorochrome database.

[13] The information processing system according to [11] or [12], in which the registration processing unit creates a new record for measurement target information, a reagent, or a fluorochrome that is not determined to be equivalent and registers the new record in the reagent database or the fluorochrome database.

[14] The information processing system according to [12] or [13], in which a name of at least one of a reagent, a biomolecule, or a fluorochrome and/or at least one of a reactive organism, a host organism, an isotype of an antibody, a size, a price, or a sales company is registered in the reagent database.

[15] The information processing system according to [14], in which the information processing device outputs the recommendation information on the basis of information of the price and/or the sales company in the reagent database.

[16] The information processing system according to any one of [12] to [15], in which the fluorochrome database includes at least one of information regarding a measurement target or the measuring instrument information.

[17] The information processing system according to [16], in which the information regarding the measurement target includes at least one of a target organism or a degree of expression of a biomolecule.

[18] The information processing system according to [16] or [17], in which the measuring instrument information includes at least one of a number or wavelengths of excitation light sources of a measuring instrument, a number, types, or exposure gains of detectors included in the measuring instrument, or a flow rate in a sample flow channel included in the measuring instrument.

[19] The information processing system according to any one of [1] to [18], in which the fluorochrome database is configured such that information regarding a fluorochrome acquired through a network is addable.

[20] An information processing method executed by using a fluorochrome database that holds fluorescence signal data of a fluorochrome associated with measuring instrument information and a reagent database that holds correspondence information regarding a correspondence between a reagent and the fluorochrome, the information processing method including:

a fluorescence signal data acquisition step of acquiring the fluorescence signal data of the fluorochrome corresponding to the reagent from the fluorochrome database using the correspondence information regarding the reagent in the reagent database identified on the basis of input measurement target information; and
an information processing step of performing information processing using the fluorescence signal data of the fluorochrome.

REFERENCE SIGNS LIST

1      Information processing system
100    Information processing device
110    Analyzer
120    Server

**Claims**

1. An information processing system comprising:

    a fluorochrome database that holds fluorescence signal data of a fluorochrome associated with measuring instrument information;
    a reagent database that holds correspondence information regarding a correspondence between a reagent and the fluorochrome; and
    an information processing device that acquires the fluorescence signal data of the fluorochrome corresponding to the reagent from the fluorochrome database using the correspondence information regarding the reagent in the reagent database identified on a basis of input measurement target information and performs information processing using the fluorescence signal data of the fluorochrome.

2. The information processing system according to claim 1, wherein the fluorescence signal data includes fluorescence spectrum data.

3. The information processing system according to claim 1, wherein the measuring instrument information includes at least one of a model name of a measuring instrument, a laser light wavelength, or a detection wavelength range of a detector.

4. The information processing system according to claim 1, wherein

    the information processing device

receives the correspondence information from the reagent database, and
acquires the fluorescence signal data of the fluorochrome corresponding to the reagent from the fluorochrome database using the received correspondence information.

**5.** The information processing system according to claim 1, wherein

the information processing device
acquires the fluorescence signal data of the fluorochrome corresponding to the reagent from the fluorochrome database without receiving the correspondence information from the reagent database.

**6.** The information processing system according to claim 1, wherein

the measurement target information includes a name, an abbreviation, or a number of at least one biomolecule,
the correspondence information includes information indicating a correspondence between the biomolecule and the reagent, and
the information processing device outputs recommendation information of the reagent corresponding to the biomolecule by the information processing.

**7.** The information processing system according to claim 6, wherein

the information processing device
searches the reagent database on a basis of the biomolecule to identify the reagent corresponding to the biomolecule; and
acquires, from the fluorochrome database, the fluorescence signal data of the fluorochrome associated with the measuring instrument information among a plurality of the fluorochromes associated with the reagent.

**8.** The information processing system according to claim 6, wherein the recommendation information of the reagent includes information regarding the reagent associated with a combination of the biomolecule and a fluorochrome corresponding to the biomolecule acquired by the information processing.

**9.** The information processing system according to claim 6, further comprising

an output unit that displays a screen prompting an input of the measurement target information,
wherein the output unit also displays the recommendation information of the reagent.

**10.** The information processing system according to claim 1, wherein

the measurement target information includes a name, an abbreviation, or a number of at least one reagent,
the fluorescence signal data includes fluorescence spectrum data,
the information processing device acquires measurement spectrum data acquired by irradiating a particle, labeled with the reagent, with excitation light, and
the information processing device performs fluorescence separation processing on the measurement spectrum data using the fluorescence spectrum data of the fluorochrome as the information processing.

**11.** The information processing system according to claim 1, further comprising

a registration processing unit that executes reagent registration processing,
wherein the registration processing unit is configured to execute integration processing of notational variations of the measurement target information, the reagent, or the fluorochrome.

**12.** The information processing system according to claim 11, wherein

the reagent database or the fluorochrome database includes an integration processing data table that is referred to for executing the integration processing of notational variations, and
the registration processing unit registers measurement target information, a reagent, or a fluorochrome determined to be equivalent although having notational variations, in an existing record in the reagent database or the fluorochrome database.

**13.** The information processing system according to claim 11, wherein the registration processing unit creates a new record for measurement target information, a reagent, or a fluorochrome that is not determined to be equivalent and registers the new record in the reagent database or the fluorochrome database.

**14.** The information processing system according to claim 12, wherein a name of at least one of a reagent, a biomolecule, or a fluorochrome and/or at least one of a reactive organism, a host organism, an isotype of an antibody, a size, a price, or a sales company is registered in the reagent database.

**15.** The information processing system according to claim 14, wherein the information processing device outputs reagent recommendation information on a basis of information of the price and/or the sales company in the reagent database.

**16.** The information processing system according to claim 12, wherein the fluorochrome database includes at least one of information regarding a measurement target or the measuring instrument information.

**17.** The information processing system according to claim 16, wherein the information regarding the measurement target includes at least one of a target organism or a degree of expression of a biomolecule.

**18.** The information processing system according to claim 16, wherein the measuring instrument information includes at least one of a number or wavelengths of excitation light sources of a measuring instrument, a number, types, or exposure gains of detectors included in the measuring instrument, or a flow rate in a sample flow channel included in the measuring instrument.

**19.** The information processing system according to claim 1, wherein the fluorochrome database is configured such that information regarding a fluorochrome acquired through a network is addable.

**20.** An information processing method executed by using a fluorochrome database that holds fluorescence signal data of a fluorochrome associated with measuring instrument information and a reagent database that holds correspondence information regarding a correspondence between a reagent and the fluorochrome, the information processing method comprising:

a fluorescence signal data acquisition step of acquiring the fluorescence signal data of the fluorochrome corresponding to the reagent from the fluorochrome database using the correspondence information regarding the reagent in the reagent database identified on a basis of input measurement target information; and
an information processing step of performing information processing using the fluorescence signal data of the fluorochrome.

# FIG. 1

1

2

# FIG. 2

# FIG. 3

1

120

131

133

REGISTRATION
PROCESSING UNIT

REAGENT DB

FLUOROCHROME
DB

132

100

INFORMATION
PROCESSING
APPARATUS

110

ANALYZER

# FIG. 4

100

103

INPUT UNIT

101

PROCESSING
UNIT

104

OUTPUT UNIT

102

STORAGE
UNIT

105

COMMUNICATION
UNIT

# FIG. 5

## FIG. 6

FLUOROCHROME DB       REAGENT DB       INFORMATION PROCESSING APPARATUS

RECEIVE INPUT OF BIOMOLECULE — S101

S103 — RECEIVE BIOMOLECULE NAME ← TRANSMIT BIOMOLECULE NAME — S102

SEARCH FOR CORRESPONDENCE INFORMATION ON BASIS OF BIOMOLECULE NAME — S104

S105 — TRANSMIT IDENTIFIED CORRESPONDENCE INFORMATION → RECEIVE CORRESPONDENCE INFORMATION — S106

S108 — RECEIVE CORRESPONDENCE INFORMATION ← TRANSMIT CORRESPONDENCE INFORMATION — S107

S109 — IDENTIFY FLUOROCHROME ON BASIS OF CORRESPONDENCE INFORMATION

S110 — TRANSMIT FLUORESCENCE SIGNAL DATA OF IDENTIFIED FLUOROCHROME → RECEIVE FLUORESCENCE SIGNAL DATA — S111

EXECUTE INFORMATION PROCESSING USING FLUORESCENCE SIGNAL DATA — S112

# FIG. 7

| PRODUCT CODE | REAGENT NAME | BIOMOLECULE NAME | FLUOROCHROME NAME | REACTIVE ORGANISM | CLONE | HOST ORGANISM | isotype | size | price | url | Company |
|---|---|---|---|---|---|---|---|---|---|---|---|
| 1234_aaaa | CD8_AF 488 | CD8 | AF 488 | mouse | 33D1 | mouse | IgE | 100mg | 100000 | http://XXYYZZ112233.com/ | B company |
| 1234_bbbb | CD4_AF 488 | CD4 | AF 488 | mouse | 33D1 | mouse | IgE | 100mg | 100000 | http://XXYYZZ112233.com/ | B company |
| 1234_cccc | CD4_AF 700 | CD4 | AF 700 | mouse | 33D1 | mouse | IgE | 100mg | 100000 | http://XXYYZZ112233.com/ | B company |
| ⋮ | ⋮ | ⋮ | ⋮ | ⋮ | ⋮ | ⋮ | ⋮ | ⋮ | ⋮ | ⋮ | ⋮ |

## FIG. 8

BIOMOLECULE NAME INTEGRATION PROCESSING TABLE

| UNIFIED BIOMOLECULE NAME | ALIAS 1 | ALIAS 2 | ALIAS 3 | · · · |
|---|---|---|---|---|
| CD1a | CD1A | CD1 | | |
| CD196 | CCR6 | BN-1 | | |
| CD371 | CLEC12A | MICL | DCAL-2 | |
| ⋮ | | | | |

## FIG. 9

| Id | FLUOROCHROME NAME | SPECTRUM SHAPE DATA | BRIGHTNESS |
|---|---|---|---|
| 1 | FITC | 0.1,0.2,0.4,⋯,10 | 100 |
| 2 | PE | 0.1,0.3,0.6,⋯,12 | 80 |
| ⋮ | ⋮ | ⋮ | ⋮ |

## FIG. 10

MODEL NAME 1 OF MEASURING INSTRUMENT

| Id | FLUOROCHROME NAME | SPECTRUM SHAPE DATA | BRIGHTNESS |
|---|---|---|---|
| 1 | FITC | 0.1,0.2,0.4,⋯,10 | 100 |
| 2 | PE | 0.1,0.3,0.6,⋯,12 | 80 |
| ⋮ | ⋮ | ⋮ | ⋮ |

MODEL NAME 2 OF MEASURING INSTRUMENT

| Id | FLUOROCHROME NAME | SPECTRUM SHAPE DATA | BRIGHTNESS |
|---|---|---|---|
| 1 | FITC | ⋮ | ⋮ |
| 2 | PE | ⋮ | ⋮ |
| ⋮ | ⋮ | ⋮ | ⋮ |

MODEL NAME 3 OF MEASURING INSTRUMENT

| Id | FLUOROCHROME NAME | SPECTRUM SHAPE DATA | BRIGHTNESS |
|---|---|---|---|
| 1 | FITC | ⋮ | ⋮ |
| 2 | PE | ⋮ | ⋮ |
| ⋮ | ⋮ | ⋮ | ⋮ |

# FIG. 11

FLUOROCHROME NAME INTEGRATION PROCESSING TABLE

| UNIFIED FLUOROCHROME NAME | ALIAS 1 | ALIAS 2 | · · · |
|---|---|---|---|
| Alexa Fluor 405 | | | |
| FITC | Fluorescein isothiocyanate | Alexa Fluor 488 | |
| PE | Phycoerythrin | | |
| Alexa Fluor 532 | | | |
| Alexa Fluor 610 | | | |
| Alexa Fluor 647 | | | |
| Alexa Fluor 700 | | | |
| ⋮ | | | |

## FIG. 12

FLUOROCHROME DB | REAGENT DB | INFORMATION PROCESSING APPARATUS

RECEIVE INPUT OF BIOMOLECULE ~S201

TRANSMIT BIOMOLECULE NAME ~S202

S203~ RECEIVE BIOMOLECULE NAME

SEARCH FOR CORRESPONDENCE INFORMATION ON BASIS OF BIOMOLECULE NAME ~S204

TRANSMIT IDENTIFIED CORRESPONDENCE INFORMATION ~S205

S206~ RECEIVE CORRESPONDENCE INFORMATION

S207~ IDENTIFY FLUOROCHROME ON BASIS OF CORRESPONDENCE INFORMATION

S208~ TRANSMIT FLUORESCENCE SIGNAL DATA OF IDENTIFIED FLUOROCHROME

RECEIVE FLUORESCENCE SIGNAL DATA ~S209

EXECUTE INFORMATION PROCESSING USING FLUORESCENCE SIGNAL DATA ~S210

EP 4 187 229 A1

# FIG. 13

# FIG. 14

RECEIVE INPUT OF BIOMOLECULE
AND EXPRESSION AMOUNT — S301

CLASSIFY BIOMOLECULES ON BASIS
OF EXPRESSION AMOUNT AND GENERATE
EXPRESSION AMOUNT CATEGORY — S302

DB ⇢ ACQUIRE PHOSPHOR DATA — S303

CLASSIFY PHOSPHORS ON BASIS
OF BRIGHTNESS AND GENERATE
BRIGHTNESS CATEGORY — S304

ASSOCIATE EXPRESSION
AMOUNT CATEGORY
WITH BRIGHTNESS CATEGORY — S305

IDENTIFY OPTIMAL PHOSPHOR
COMBINATION USING CORRELATION
INFORMATION BETWEEN PHOSPHORS — S306

ASSIGN PHOSPHORS CONSTITUTING
OPTIMAL PHOSPHOR COMBINATION
TO BIOMOLECULE — S307

PERFORM
SEPARABILITY EVALUATION — S308

OUTPUT ASSIGNMENT RESULT — S309

FIG. 15A

EP 4 187 229 A1

a

```
+    : 3
++   : 4
+++  : 2
```

| Antibody | Expression Level |
|----------|------------------|
| CD1a | + |
| CD2 | + |
| CD3 | + |
| CD4 | ++ |
| CD5 | ++ |
| CD6 | ++ |
| CD7 | ++ |
| CD8 | +++ |
| CD9 | +++ |

LB1    LB2

b

Bright
| PE | 100.0 |
|----|-------|
| PE-Cy5 | 83.7 |
| BV421 | 65.0 |
| PE-Dazzle594 | 49.5 |
| PE-Cy7 | 26.7 |
| BV605 | 16.9 |

Normal
| APC | 15.1 |
|-----|------|
| BV711 | 13.7 |
| BV650 | 13.6 |
| Alexa Fluor 647 | 8.6 |
| BV510 | 7.2 |
| FITC | 6.2 |
| BV785 | 6.1 |

Dim
| PerCP-Cy5.5 | 5.6 |
|-------------|-----|
| PacificBlue | 4.9 |
| APC-Cy7 | 2.6 |
| Alexa Fluor 700 | 1.9 |
| PerCP | 1.7 |

c

Bright
| | PE | 100.0 |
|---|----|-------|
| ★ | PE | 100.0 |
| | PE-Cy5 | 83.7 |
| ★ | BV421 | 65.0 |
| | PE-Dazzle594 | 49.5 |
| | PE-Cy7 | 26.7 |
| ★ | BV605 | 16.9 |

Normal
| ★ | APC | 15.1 |
|---|-----|------|
| | BV711 | 13.7 |
| | BV650 | 13.6 |
| ★ | Alexa Fluor 647 | 8.6 |
| ★ | BV510 | 7.2 |
| ★ | FITC | 6.2 |
| | BV785 | 6.1 |

Dim
| | PerCP-Cy5.5 | 5.6 |
|---|-------------|-----|
| | PacificBlue | 4.9 |
| ★ | APC-Cy7 | 2.6 |
| | Alexa Fluor 700 | 1.9 |
| ★ | PerCP | 1.7 |

d

| Antibody | | Fluorochrome | Spectrum |
|----------|-----|--------------|----------|
| CD1a | + | PE | |
| CD2 | + | BV421 | |
| CD3 | + | BV605 | |
| CD4 | ++ | APC | |
| CD5 | ++ | Alexa Fluor 647 | |
| CD6 | ++ | BV510 | |
| CD7 | ++ | FITC | |
| CD8 | +++ | APC-Cy7 | |
| CD9 | +++ | PerCP | |

## FIG. 15B

| AntiBody | Fluorochrome | Clone | ISO Type | Target Species | Host Species | Catalog | Size | Company | Price | URL | Product Name |
|---|---|---|---|---|---|---|---|---|---|---|---|
| CD27 | PE | O323 | IgG1, κ | human | Mouse | 2114035 | 25 tests | sony | 17400 | https://d177r6bz0xmhgl.cloudfront.net/pub/media/pds/2114035_TDS.pdf | Anti-human CD27, |
| CD127 (IL-7Rα) | BV421 | A019D5 | IgG1, κ | human | Mouse | 2356545 | 25 tests | sony | 34400 | https://d177r6bz0xmhgl.cloudfront.net/pub/media/pds/2356545_TDS.pdf | Anti-human CD12: |
| CD19 | BV605 | HIB19 | IgG1, κ | human | Mouse | 2111215 | 25 tests | sony | 32400 | https://d177r6bz0xmhgl.cloudfront.net/pub/media/pds/2111215_TDS.pdf | Isotype Control,Mc |
| CD5 | APC | UCHT2 | IgG1, κ | human | Mouse | 2103055 | 25 tests | sony | 19800 | https://d177r6bz0xmhgl.cloudfront.net/pub/media/pds/2103055_TDS.pdf | Anti-human CD5,M |
| CD4 | BV510 | OKT4 | IgG2b, κ | human | Mouse | 2187215 | 25 tests | sony | 29800 | https://d177r6bz0xmhgl.cloudfront.net/pub/media/pds/2187215_TDS.pdf | Isotype Control,Mc |
| CD3 | PacificBlue | UCHT1 | IgG1, κ | human | Mouse | 2102085 | 100 μg | sony | 39800 | https://d177r6bz0xmhgl.cloudfront.net/pub/media/pds/2102085_TDS.pdf | Anti-human CD3,M |
| CD8a | APC-Cy7 | HIT8a | IgG1, κ | human | Mouse | 2104625 | 25 tests | sony | 22800 | https://d177r6bz0xmhgl.cloudfront.net/pub/media/pds/2104625_TDS.pdf | Anti-human CD8a, |
| CD45 | Alexa Fluor 700 | HI30 | IgG1, κ | human | Mouse | 2120115 | 25 μg | sony | 18400 | https://d177r6bz0xmhgl.cloudfront.net/pub/media/pds/2120115_TDS.pdf | Anti-human CD45, |

EP 4 187 229 A1

## FIG. 16

EP 4 187 229 A1

max value

| 0.934428 |

max index(es)

| 0 | 3 | 4 |

SELECTED CORRELATION COEFFICIENT

|                | PE    | BV421 | BV605 | APC   | Alexa Fluor 647 | BV510 | FITC  | APC-Cy7 | PerCP |
|----------------|-------|-------|-------|-------|-----------------|-------|-------|---------|-------|
| PE             | 0.000 | 0.000 | 0.297 | 0.003 | 0.003           | 0.147 | 0.029 | 0.000   | 0.002 |
| BV421          | 0.000 | 0.000 | 0.001 | 0.000 | 0.000           | 0.016 | 0.005 | 0.000   | 0.000 |
| BV605          | 0.297 | 0.001 | 0.000 | 0.108 | 0.111           | 0.086 | 0.008 | 0.001   | 0.078 |
| APC            | 0.003 | 0.000 | 0.108 | 0.000 | 0.934           | 0.002 | 0.000 | 0.032   | 0.651 |
| Alexa Fluor 647| 0.003 | 0.000 | 0.111 | 0.934 | 0.000           | 0.002 | 0.000 | 0.029   | 0.835 |
| BV510          | 0.147 | 0.016 | 0.086 | 0.002 | 0.002           | 0.000 | 0.887 | 0.000   | 0.001 |
| FIT            | 0.029 | 0.005 | 0.008 | 0.000 | 0.000           | 0.887 | 0.000 | 0.000   | 0.000 |
| CAPC-Cy7       | 0.000 | 0.000 | 0.001 | 0.032 | 0.029           | 0.000 | 0.000 | 0.000   | 0.019 |
| PerCP          | 0.002 | 0.000 | 0.078 | 0.651 | 0.835           | 0.001 | 0.000 | 0.019   | 0.000 |

# FIG. 17

Weaker

| Antibody | Expression Level |
|---|---|
| CD1a | + |
| CD2 | + |
| CD3 | + |
| CD4 | ++ |
| CD5 | ++ |
| CD6 | ++ |
| CD7 | ++ |
| CD8 | +++ |
| CD9 | +++ |

Stronger

| | | |
|---|---|---|
| ★ | PE | 100.0 |
| | PE-Cy5 | 83.7 |
| ★ | BV421 | 65.0 |
| | PE-Dazzle594 | 49.5 |
| | PE-Cy7 | 26.7 |
| ★ | BV605 | 16.9 |
| ★ | APC | 15.1 |
| | BV711 | 13.7 |
| | BV650 | 13.6 |
| ★ | Alexa Fluor 647 | 8.6 |
| ★ | BV510 | 7.2 |
| ★ | FITC | 6.2 |
| | BV785 | 6.1 |
| | PerCP-Cy5.5 | 5.6 |
| | PacificBlue | 4.9 |
| ★ | APC-Cy7 | 2.6 |
| | Alexa Fluor 700 | 1.9 |
| ★ | PerCP | 1.7 |

| Antibody | | Fluorochrome | Spectrum |
|---|---|---|---|
| CD1a | + | PE | |
| CD2 | + | BV421 | |
| CD3 | + | BV605 | |
| CD4 | ++ | APC | |
| CD5 | ++ | Alexa Fluor 647 | |
| CD6 | ++ | BV510 | |
| CD7 | ++ | FITC | |
| CD8 | +++ | APC-Cy7 | |
| CD9 | +++ | PerCP | |

# FIG. 18

START — S401

CALCULATE INTER-PHOSPHOR SI — S402

IDENTIFY PHOSPHOR HAVING POOREST SI — S403

IDENTIFY CANDIDATE PHOSPHORS TO SUBSTITUTE FOR IDENTIFIED PHOSPHOR — S404

CALCULATE INTER-PHOSPHOR SI IN CASE OF BEING CHANGED TO CANDIDATE PHOSPHOR FOR ALL CANDIDATE PHOSPHORS — S405

SELECT PHOSPHOR WITH LARGEST MINIMUM VALUE OF SI AMONG CALCULATION RESULTS AS PHOSPHOR SUBSTITUTE — S406

YES

IS THERE BETTER COMBINATION? — S407

NO

END — S408

## FIG. 19

Reagent | Stain-Index | SSM

| Nega/Posi | PE | BV421 | BV605 | APC | BV711 | FITC | BV785 | PerCP-Cys.5 | PacificBlue | PerCP |
|---|---|---|---|---|---|---|---|---|---|---|
| PE | - | 163.2 | 26.1 | 32.5 | 37.9 | 292.5 | 81.8 | 11.2 | 478.7 | 13.1 |
| BV421 | 264.4 | - | 329.5 | 243.5 | 159.9 | 54.3 | 215.8 | 54.4 | 26.9 | 70.4 |
| BV605 | 59.3 | 36.7 | - | 15 | 16.4 | 168.2 | 33.7 | 5 | 89.6 | 5.9 |
| APC | 530.9 | 68.1 | 421 | - | 12.7 | 494.7 | 26.4 | 3.9 | 452.8 | 4.3 |
| BV711 | 373 | 22.3 | 463.7 | 44.9 | - | 105.2 | 12.7 | 2.8 | 59.4 | 4.3 |
| FITC | 63.3 | 303.7 | 77 | 94.8 | 101.3 | - | 197.9 | 30.6 | 442.6 | 36.6 |
| BV785 | 412 | 30.3 | 466.4 | 182 | 92.8 | 128.7 | - | 20.9 | 69.7 | 31.8 |
| PerCP-Cy5.5 | 537.7 | 66.6 | 513.3 | 27.6 | 12.1 | 491.7 | 22.3 | - | 472.4 | 5.1 |
| Pacific-Blue | 98.9 | 13.5 | 109.7 | 107.7 | 99.4 | 24.7 | 198.2 | 30.6 | - | 37.2 |
| PerCP | 536.6 | 105.4 | 515 | 216 | 19.8 | 474.3 | 47.2 | 6 | 467.9 | - |

48

# FIG. 20

| | |
|---|---|
| CD11c | ++ |

| | |
|---|---|
| CD4 | +++ |
| CD8a | +++ |

| PerCP-Cy5.5 ∨ |
|---|
| |
| Alexa Fluor 647 |
| APC-Cy7 |
| BV510 |
| BV650 |
| PE-Cy5 |
| PE-Cy7 |
| PerCP-Cy5.5 |

# FIG. 21A

**Alexa Fluor 647**

| Nega/Posi | PE | BV421 | BV605 | APC | BV711 | FITC | BV785 | Alexa Fluor 647 | Pacific Blue | PerCP |
|---|---|---|---|---|---|---|---|---|---|---|
| PE | - | 236.6 | 26 | 12.5 | 95.4 | 297.1 | 80.1 | 6.1 | 478.5 | 9.5 |
| BV421 | 252.7 | - | 328.3 | 67.2 | 389.3 | 54.3 | 209 | 30.8 | 26.9 | 50.6 |
| BV605 | 59.6 | 39.6 | - | 5.8 | 40.9 | 167.8 | 33.8 | 2.8 | 89.4 | 4.3 |
| APC | 446.6 | 152.8 | 390.8 | - | 29.6 | 497 | 265 | 2.1 | 451 | 3.3 |
| BV711 | 322.8 | 25.2 | 441.7 | 3.7 | - | 106.4 | 12.2 | 1.8 | 59.8 | 3.1 |
| FITC | 63.1 | 341 | 76.4 | 36.4 | 254.6 | - | 194.2 | 16.9 | 442.1 | 27.2 |
| BV785 | 412.4 | 30.7 | 465.2 | 28.8 | 119 | 128.3 | - | 13.1 | 69.6 | 23.5 |
| Alexa Fluor 647 | 290.4 | 174.3 | 286.6 | 4.9 | 36.8 | 479.2 | 31.1 | - | 465.9 | 3.6 |
| Pacific Blue | 98 | 13.5 | 109.7 | 36.9 | 254.5 | 24.7 | 192.6 | 17 | - | 27.3 |
| PerCP | 498.4 | 224.7 | 500.9 | 6.9 | 51.5 | 482 | 46.2 | 3.1 | 467.2 | - |

**BV510**

| Nega/Posi | PE | BV421 | BV605 | APC | BV711 | FITC | BV785 | BV510 | Pacific Blue | PerCP |
|---|---|---|---|---|---|---|---|---|---|---|
| PE | - | 228.4 | 25.9 | 32.2 | 103.8 | 67.9 | 80.5 | 79.3 | 345.5 | 20 |
| BV421 | 160.9 | - | 201.5 | 247.1 | 478.1 | 18.3 | 209.7 | 25.3 | 25.7 | 131.4 |
| BV605 | 58.5 | 38.9 | - | 15.1 | 45 | 57.3 | 94.1 | 70 | 85.4 | 9 |
| APC | 483.3 | 165.7 | 406.6 | - | 33.5 | 119 | 27.6 | 160.4 | 426.7 | 6.3 |
| BV711 | 256.9 | 25.1 | 324.1 | 46.4 | - | 33.4 | 13.3 | 45.6 | 56.8 | 14.7 |
| FITC | 46.2 | 140.9 | 55.7 | 95 | 271.2 | - | 187.8 | 8.5 | 70.4 | 59.3 |
| BV785 | 292.1 | 29.8 | 355.6 | 185.2 | 184.3 | 40.2 | - | 52.8 | 66.3 | 87.4 |
| BV510 | 29.7 | 48.2 | 33.1 | 36.7 | 102.2 | 4.7 | 75.6 | - | 32 | 21.8 |
| Pacific Blue | 61 | 13.1 | 73.2 | 106.1 | 281 | 7.7 | 183.6 | 103 | - | 61.3 |
| PerCP | 495.4 | 244.5 | 462.9 | 22.3 | 61.3 | 116.6 | 46.6 | 156.9 | 430.9 | - |

**PE-Cy5**

| Nega/Posi | PE | BV421 | BV605 | APC | BV711 | FITC | BV785 | PE-Cy5 | Pacific Blue | PerCP |
|---|---|---|---|---|---|---|---|---|---|---|
| PE | - | 225.2 | 25.8 | 9.7 | 88.7 | 296.3 | 79.4 | 49.3 | 479.1 | 9.5 |
| BV421 | 253.3 | - | 325.7 | 50.1 | 352.3 | 54.3 | 210.9 | 245.4 | 26.3 | 49.3 |
| BV605 | 49.2 | 39.7 | - | 4.5 | 36.9 | 167.6 | 33.7 | 22.6 | 89.6 | 4.3 |
| APC | 59.3 | 147.3 | 422.5 | - | 27 | 488.2 | 26.3 | 17.3 | 451 | 3.2 |
| BV711 | 44.4 | 25.1 | 465.3 | 2.9 | - | 106.4 | 12.3 | 13.3 | 59.4 | 3 |
| FITC | 53 | 341.1 | 76.6 | 28.2 | 233.6 | - | 191.5 | 135.5 | 442.7 | 27 |
| BV785 | 210.7 | 30.7 | 466.9 | 20.8 | 107.5 | 128.2 | - | 100.6 | 69.7 | 22.3 |
| PE-Cy5 | 18.2 | 61.9 | 47.7 | 3.9 | 10.4 | 337 | 9.9 | - | 451.5 | 11 |
| Pacific Blue | 99.4 | 13.5 | 109.7 | 28.6 | 229.8 | 24.7 | 188.1 | 136.4 | - | 27.1 |
| PerCP | 85.9 | 212.2 | 516.4 | 5.3 | 45.1 | 482 | 45.3 | 25.5 | 468.3 | - |

# FIG. 21B

**APC-Cy7**

| Nega/Posi | PE | BV421 | BV605 | APC | BV711 | FITC | BV785 | APC-Cy7 | PacificBlue | PerCP |
|---|---|---|---|---|---|---|---|---|---|---|
| PE | - | 59.8 | 26.1 | 31.7 | 9.1 | 289.2 | 6.6 | 2.9 | 485.1 | 20.1 |
| BV421 | 263.2 | - | 327.4 | 220.7 | 449.7 | 54.3 | 21 | 8.9 | 26.8 | 129.9 |
| BV605 | 59.6 | 20.2 | - | 14.9 | 42.1 | 166.9 | 27 | 1.1 | 89.2 | 9.2 |
| APC | 528.1 | 17.1 | 320.6 | - | 31.8 | 400.6 | 2 | 0.8 | 454.7 | 6.3 |
| BV711 | 365.8 | 8.7 | 237.3 | 24 | - | 103.7 | 1.1 | 0.4 | 59.3 | 14.8 |
| FITC | 63 | 145.9 | 76.2 | 91.4 | 255.6 | - | 17.8 | 7.6 | 440.5 | 60.3 |
| BV785 | 406.4 | 14.4 | 320.7 | 41.4 | 166.7 | 125.3 | - | 0.7 | 69.6 | 79.7 |
| APC-Cy7 | 539.3 | 25.9 | 393.5 | 52.5 | 173.7 | 423.4 | 3.1 | - | 469.3 | 47.3 |
| PacificBlue | 98.3 | 13.1 | 112.4 | 102.3 | 262.6 | 24.6 | 18.5 | 8.1 | - | 61.5 |
| PerCP | 536.9 | 26.3 | 423.2 | 20.6 | 58.1 | 455.6 | 3.1 | 1.3 | 471 | - |

**BV650**

| Nega/Posi | PE | BV421 | BV605 | APC | BV711 | FITC | BV785 | BV650 | PacificBlue | PerCP |
|---|---|---|---|---|---|---|---|---|---|---|
| PE | - | 130.7 | 24.6 | 14.8 | 89.1 | 297.8 | 76.6 | 13.3 | 473 | 17.6 |
| BV421 | 259.8 | - | 278.4 | 73.9 | 340.3 | 54.4 | 198.1 | 60.7 | 26.9 | 105.3 |
| BV605 | 59.2 | 34.9 | - | 6.6 | 36.3 | 167.8 | 33 | 5.8 | 89.5 | 7.9 |
| APC | 531.3 | 132.4 | 235 | - | 33.9 | 491.1 | 26.5 | 17.6 | 452.6 | 6.2 |
| BV711 | 358.9 | 25.4 | 252.5 | 25.9 | - | 106.4 | 13.3 | 25.3 | 59.5 | 14.3 |
| FITC | 62.9 | 262.6 | 70.6 | 40.6 | 222 | - | 183.5 | 34.4 | 442.4 | 51.4 |
| BV785 | 406.1 | 30.6 | 288.5 | 36.3 | 110.6 | 127.1 | - | 28.5 | 69.6 | 61.4 |
| BV650 | 265.6 | 29.6 | 81.2 | 5.8 | 28 | 135.2 | 24 | - | 75.3 | 5.6 |
| PacificBlue | 56.8 | 13.5 | 102.7 | 42.3 | 220.3 | 24.7 | 179.4 | 35.4 | - | 52.9 |
| PerCP | 523 | 182.6 | 234.9 | 17.3 | 58.4 | 477.1 | 46.8 | 20.8 | 468 | - |

**PE-Cy7**

| Nega/Posi | PE | BV421 | BV605 | APC | BV711 | FITC | BV785 | PE-Cy7 | PacificBlue | PerCP |
|---|---|---|---|---|---|---|---|---|---|---|
| PE | - | 80.4 | 26 | 32.3 | 92.1 | 294.6 | 9.1 | 40.2 | 451.5 | 20.8 |
| BV421 | 261.9 | - | 325.3 | 246.8 | 454.1 | 54.2 | 28.5 | 119.6 | 26.8 | 130 |
| BV605 | 57.2 | 25.7 | - | 15.1 | 42.6 | 160.4 | 3.7 | 16.1 | 89.3 | 9.1 |
| APC | 236.1 | 23.6 | 406.2 | - | 32.2 | 473.1 | 2.7 | 11.8 | 455.1 | 6.3 |
| BV711 | 129.4 | 11.4 | 406.7 | 45.9 | - | 106.9 | 1.3 | 6.4 | 59.2 | 14.5 |
| FITC | 63.7 | 184.7 | 75.7 | 95.3 | 256.2 | - | 24.3 | 105.3 | 441.3 | 59.9 |
| BV785 | 181.6 | 17.1 | 452.8 | 183.9 | 164.4 | 125.2 | - | 5.4 | 69.5 | 88.4 |
| PE-Cy7 | 57.8 | 12.8 | 107.5 | 115.4 | 132.3 | 271.4 | 1.8 | - | 441 | 63 |
| PacificBlue | 99.8 | 13.3 | 111.1 | 106.8 | 263 | 24.6 | 26 | 111.2 | - | 61.3 |
| PerCP | 308.6 | 35.9 | 493.9 | 22.4 | 57.6 | 475.5 | 4.2 | 18.4 | 469.9 | - |

# FIG. 22

EP 4 187 229 A1

*FIG. 23*

## FIG. 24

| FLUOROCHROME | BRIGHTNESS |
|---|---|
| FITC | 100 |
| PE | 80 |
| ⋮ | ⋮ |

## FIG. 25

| FLUOROCHROME | PMT_1 | PMT_2 | · · · | PMT_N-2 | PMT_N-1 | PMT_N |
|---|---|---|---|---|---|---|
| FITC | 0.2 | 0.3 | | 0.9 | 1 | 0.1 |
| PE | 0.3 | 0.2 | | 1 | 0.9 | 0.8 |
| ⋮ | ⋮ | ⋮ | ⋮ | ⋮ | ⋮ | ⋮ |

FITC

PE

# FIG. 26

START ~ S501

ACQUIRE
REAGENT INFORMATION ~ S502

S503

DOES FLUOROCHROME
NAME INCLUDED IN REAGENT
INFORMATION EXIST IN INTEGRATION
PROCESSING DB?

N O

Y E S

REGISTER FLUOROCHROME
OF REAGENT USING UNIFIED
FLUOROCHROME NAME ~ S504

REGISTER FLUOROCHROME
OF REAGENT USING ORIGINAL
FLUOROCHROME NAME ~ S505

S506

DOES BIOMOLECULE
NAME INCLUDED IN REAGENT
INFORMATION EXIST IN INTEGRATION
PROCESSING DB?

REGISTER BIOMOLECULE
OF REAGENT USING UNIFIED
BIOMOLECULE NAME ~ S507

REGISTER BIOMOLECULE
OF REAGENT USING ORIGINAL
BIOMOLECULE NAME ~ S508

END ~ S509

# FIG. 27

REAGENT INFORMATION TO BE REGISTERED

| PRODUCT CODE | REAGENT NAME | BIOMOLECULE NAME | FLUOROCHROME NAME | ... |
|---|---|---|---|---|
| Xxx | Hoi | CCR6 | Alexa Fluor 488 | |
| yyy | Fuga | CD196 | FITC | |
| ccc | Fuga | BN-1 | PE | |
| zzz | Hoge | AAA | PE | |

# FIG. 28

REAGENT INFORMATION TO BE REGISTERED

| PRODUCT CODE | REAGENT NAME | BIOMOLECULE NAME | FLUOROCHROME NAME | ... |
|---|---|---|---|---|
| Xxx | Hoi | CCR6 | Alexa Fluor 488 | |
| yyy | Fuga | CD196 | FITC | |
| ccc | Fuga | BN-1 | PE | |
| zzz | Hoge | AAA | PE | |

| ACTION |
|---|
| REGISTER FLUOROCHROME NAME AS FITC |
| REGISTER FLUOROCHROME NAME AS FITC |
| REGISTER FLUOROCHROME NAME AS PE |
| REGISTER FLUOROCHROME NAME AS PE |

# FIG. 29

REAGENT INFORMATION TO BE REGISTERED

| PRODUCT CODE | REAGENT NAME | BIOMOLECULE NAME | FLUOROCHROME NAME | ... |
|---|---|---|---|---|
| Xxx | Hoi | CCR6 | Alexa Fluor 488 | |
| yyy | Fuga | CD196 | FITC | |
| ccc | Fuga | BN-1 | PE | |
| zzz | Hoge | AAA | PE | |

| ACTION |
|---|
| REGISTER BIOMOLECULE NAME AS CD196 |
| REGISTER BIOMOLECULE NAME AS CD196 |
| REGISTER BIOMOLECULE NAME AS CD196 |
| REGISTER BIOMOLECULE NAME AS AAA |

# FIG. 30

BIOMOLECULE NAME INTEGRATION PROCESSING TABLE

| UNIFIED BIOMOLECULE NAME | ALIAS 1 | ALIAS 2 | ALIAS 3 | . . . |
|---|---|---|---|---|
| CD1a | CD1A | CD1 | | |
| CD196 | CCR6 | BN-1 | | |
| CD371 | CLEC12A | MICL | DCAL-2 | |
| ⋮ | | | | |
| AAA | | | | |

# FIG. 31

REGISTRATION RESULT

| PRODUCT CODE | REAGENT NAME | BIOMOLECULE NAME | FLUOROCHROME NAME | ... |
|---|---|---|---|---|
| Xxx | Hoi | CD196(CCR6) | FITC(Alexa Fluor 488) | |
| yyy | Fuga | CD196 | FITC | |
| ccc | Fuga | CD196(BN-1) | PE | |
| zzz | Hoge | AAA | PE | |

## FIG. 32

REGISTRATION RESULT

| PRODUCT CODE | REAGENT NAME | BIOMOLECULE NAME | FLUOROCHROME NAME | ... |
|---|---|---|---|---|
| Xxx | Hoi | mID:10 | sID:1 | |
| yyy | Fuga | mID:10 | sID:1 | |
| ccc | Fuga | mID:10 | sID:10 | |
| zzz | Hoge | mID:12 | sID:10 | |

FIG. 33

FLUOROCHROME DB | REAGENT DB | INFORMATION PROCESSING APPARATUS

| | | ACQUIRE REAGENT NAME | ~S601 |

S603~ RECEIVE REAGENT NAME ← TRANSMIT REAGENT NAME ~S602

SEARCH FOR CORRESPONDENCE INFORMATION ON BASIS OF REAGENT NAME ~S604

S605~ TRANSMIT IDENTIFIED CORRESPONDENCE INFORMATION → RECEIVE CORRESPONDENCE INFORMATION ~S606

S608~ RECEIVE CORRESPONDENCE INFORMATION ← TRANSMIT CORRESPONDENCE INFORMATION ~S607

S609~ IDENTIFY FLUOROCHROME ON BASIS OF CORRESPONDENCE INFORMATION

S610~ TRANSMIT FLUORESCENCE SIGNAL DATA OF IDENTIFIED FLUOROCHROME → RECEIVE FLUORESCENCE SIGNAL DATA ~S611

EXECUTE INFORMATION PROCESSING USING FLUORESCENCE SIGNAL DATA ~S612

EP 4 187 229 A1

FIG. 34

FLUOROCHROME DB     REAGENT DB     INFORMATION PROCESSING APPARATUS

ACQUIRE REAGENT NAME — S701

S703 — RECEIVE REAGENT NAME ← TRANSMIT REAGENT NAME — S702

SEARCH FOR CORRESPONDENCE INFORMATION ON BASIS OF REAGENT NAME — S704

S706 — RECEIVE CORRESPONDENCE INFORMATION ← TRANSMIT IDENTIFIED CORRESPONDENCE INFORMATION — S705

S707 — IDENTIFY FLUOROCHROME ON BASIS OF CORRESPONDENCE INFORMATION

S708 — TRANSMIT FLUORESCENCE SIGNAL DATA OF IDENTIFIED FLUOROCHROME → RECEIVE FLUORESCENCE SIGNAL DATA — S709

EXECUTE INFORMATION PROCESSING USING FLUORESCENCE SIGNAL DATA — S710

EP 4 187 229 A1

## INTERNATIONAL SEARCH REPORT

| | International application No. |
|---|---|
| | PCT/JP2021/022635 |

**A.   CLASSIFICATION OF SUBJECT MATTER**
Int. Cl. G01N15/14(2006.01)i, G01N21/64(2006.01)i
FI: G01N21/64 F, G01N15/14 C

According to International Patent Classification (IPC) or to both national classification and IPC

**B.   FIELDS SEARCHED**

Minimum documentation searched (classification system followed by classification symbols)
Int. Cl. G01N21/62-21/74, G01N33/48-33/98

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)
JSTPlus/JMEDPlus/JST7580 (JDreamIII)

**C.   DOCUMENTS CONSIDERED TO BE RELEVANT**

| Category* | Citation of document, with indication, where appropriate, of the relevant passages | Relevant to claim No. |
|---|---|---|
| Y
A | JP 2019-203842 A (SYSMEX CORP.) 28 November 2019 (2019-11-28), paragraphs [0026], [0027], [0035], [0046], [0052]-[0115], fig. 14, entire text, all drawings | 1-10, 19-20
11-18 |
| Y
A | WO 2019/106973 A1 (SONY CORP.) 06 June 2019 (2019-06-06), paragraphs [0036], [0041]-[0048], [0074], [0075], entire text, all drawings | 1-10, 19-20
11-18 |
| A | JP 2016-517000 A (BECKMAN COULTER, INC.) 09 June 2016 (2016-06-09), entire text, all drawings | 1-20 |

☐  Further documents are listed in the continuation of Box C.      ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search
05.08.2021 | Date of mailing of the international search report
24.08.2021 |
|---|---|
| Name and mailing address of the ISA/
Japan Patent Office
3-4-3, Kasumigaseki, Chiyoda-ku,
Tokyo 100-8915, Japan | Authorized officer

Telephone No. |

Form PCT/ISA/210 (second sheet) (January 2015)

INTERNATIONAL SEARCH REPORT
Information on patent family members

International application No.

PCT/JP2021/022635

| Patent Documents referred to in the Report | Publication Date | Patent Family | Publication Date |
|---|---|---|---|
| JP 2019-203842 A | 28.11.2019 | US 2019/0360910 A1 paragraphs [0049], [0060], [0066]-[0130], fig. 14 EP 3572811 A1 CN 110531092 A | |
| WO 2019/106973 A1 | 06.06.2019 | EP 3579238 A1 paragraphs [0058]-[0062], [0082]-[0101], [0143]-[0148] CN 110178013 A | |
| JP 2016-517000 A | 09.06.2016 | US 2016/0025621 A1 entire text, all drawings WO 2014/144826 A1 CN 105051521 A CN 111537426 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016517000 A
- JP 2020041881 A
- JP 5985140 B